# EUROPÄISCHE PATENTSCHRIFT

(11) **EP 3 819 875 B1**
(45) Veröffentlichungstag und Bekanntmachung des Hinweises auf die Patenterteilung: **15.05.2024**
(21) Anmeldenummer: 20196923.5
(22) Anmeldetag: 18.09.2020
(51) Int. Cl.: G07B 15/02, G06Q 30/02, G07F 17/24, B60L 53/66

(54) **VERFAHREN ZUM BETRIEB EINER GEBÜHRENPFLICHTIGEN PARKEINRICHTUNG**
METHOD FOR OPERATING A PARKING DEVICE FOR WHICH A CHARGE IS DUE
PROCÉDÉ DE FONCTIONNEMENT D'UN SYSTÈME DE STATIONNEMENT PAYANT

(30) Priorität: 07.11.2019 DE 102019130029
(43) Veröffentlichungstag der Anmeldung: 12.05.2021
(73) Patentinhaber: Scheidt & Bachmann GmbH, 41238 Mönchengladbach (DE)
(72) Erfinder: Miller, Norbert, 41063 Mönchengladbach (DE); Rütten, Konrad, 52525 Heinsberg (DE); Noll, Elmar, 41068 Mönchengladbach (DE)
(74) Vertreter: Brinkmann & Partner

(56) Entgegenhaltungen:
- EP-A1- 2 273 462
- US-A1- 2011 131 083
- US-A1- 2017 243 418

## Beschreibung

Die Erfindung betrifft ein Verfahren zum Betrieb einer gebührenpflichtigen Parkeinrichtung, insbesondere einer Parkeinrichtung für wenigstens teilelektrisch betriebene Fahrzeuge, die eine Mehrzahl von Stromladepunkten aufweist, mit folgenden Schritten:
- bei Einfahren eines Fahrzeugs in die Parkeinrichtung Empfangen eines ersten Datensatzes durch eine Auswerteeinrichtung, wobei der erste Datensatz eine einen Nutzer der Parkeinrichtung identifizierende Kennung, eine Kennung der Einfahrt der Parkeinrichtung und einen ersten Zeitstempel umfasst,
- bei Ausfahren des Fahrzeugs aus der Parkeinrichtung Empfangen eines zweiten Datensatzes durch die Auswerteeinrichtung, wobei der zweite Datensatz die den Nutzer der Parkeinrichtung identifizierende Kennung, eine Kennung der Ausfahrt der Parkeinrichtung und einen zweiten Zeitstempel umfasst.

Des Weiteren betrifft die Erfindung eine Parkeinrichtung, insbesondere eine gebührenpflichtige Parkeinrichtung für wenigstens teilelektrisch betriebene Fahrzeuge, mit einer Mehrzahl von Stromladepunkten.

Unter wenigstens teilelektrisch betriebenen Fahrzeugen sind solche Fahrzeug zu verstehen, die zumindest einen Teil ihrer Betriebsenergie als elektrische Energie von außerhalb des Fahrzeugs beziehen. Anmeldungsgemäß können dies wenigstens sein: vollständig batterieelektrisch betriebene PKW, plug-in hybride PKW, elektrische Krafträder, elektrische Fahrräder (E-Bikes), teilelektrische Fahrräder (Pedelecs, S-Pedelcs) und dergleichen.

Aus dem Stand der Technik sind Verfahren zum Betrieb einer gebührenpflichtigen Parkeinrichtung bekannt, bei denen ein sogenanntes Parkmedium beispielsweise in der Ausgestaltung einer Magnetstreifenkarte, eines Chip-Coins und/oder dgl. Verwendung findet. Bei derartigen Verfahren erhält ein Nutzer beim Einfahren in eine Parkeinrichtung ein ausgegebenes Parkmedium ("Kurzparkerticket"), das beim Ausfahren aus der Parkeinrichtung als Nachweis für eine erfolgte Parkgebührenentrichtung dient. Das Parkmedium wird zu diesem Zweck beim Einfahren in die Parkeinrichtung mit einem Zeitstempel versehen, der Daten über den Tag und die Uhrzeit des Einfahrens beinhaltet. Zwecks Parkgebührenentrichtung dienen Kassenautomaten, die nach einem Auslesen des auf dem Parkmedium verzeichneten Zeitstempels die fällige Parkgebühr anhand einer vorgegebenen Gebührenordnung berechnen und zur Anzeige bringen. Eine Gebührenbegleichung findet direkt am Kassenautomaten statt und wird von diesem als erfolgt auf dem Parkmedium vermerkt. Innerhalb eines vorgegebenen Zeitfensters autorisiert das so mit einem "bezahlt"-Vermerk ausgerüstete Parkmedium zum Ausfahren aus der Parkeinrichtung.

Aus dem Stand der Technik sind ferner Verfahren zum Betrieb einer gebührenpflichtigen Parkeinrichtung bekannt, die parkmediumfrei, d.h. ohne die Ausgabe eines Parkmediums beim Einfahren, arbeiten. Die Autorisierung eines Nutzers zum Einfahren in die Parkeinrichtung sowie zum Ausfahren aus der Parkeinrichtung einerseits sowie die Parkgebührenentrichtung nach einer erfolgten Nutzung der Parkeinrichtung andererseits erfolgen mittels einer eineindeutigen Nutzerkennung. Eine solche Nutzerkennung kann beispielsweise ein zuvor an den Nutzer ausgegebener Datenträger oder das Kennzeichen des vom Nutzer in der Parkeinrichtung abzustellenden Fahrzeugs sein.

Gemäß einem parkmediumfreien Verfahren der gattungsgemäßen Art dient zur eineindeutigen Identifizierung eines Nutzers ein vom Nutzer mitgeführter Datenträger in Form eines fernauslesbaren RFID-Tags. Diesen Tag erhält der Nutzer nach einer vorherigen Registrierung. Mit der Registrierung hat der Nutzer nutzerspezifische Daten anzugeben, beispielsweise Abrechnungsdaten. Diese sind in der Datenbank eines Hintergrundsystems gespeichert und mit der auf dem RFID-Tag vermerkten eineindeutigen Nutzerkennung verknüpft.

Beim Einfahren in eine Parkeinrichtung wird der vom Nutzer mitgeführte RFID-Tag durch eine im Bereich der Einfahrt angeordnete Erfassungseinheit fernausgelesen. Auf Basis der vom RFID-Tag bereitgestellten und fernausgelesenen Nutzerkennung wird von der Erfassungseinheit ein erster Datensatz erzeugt, der an eine Auswerteeinrichtung weitergeleitet wird. Dabei umfasst der erste Datensatz nicht nur die Nutzerkennung, sondern auch eine Kennung der Einfahrt der Parkeinrichtung und einen ersten Zeitstempel. Beim Ausfahren aus der Parkeinrichtung erfolgt durch eine im Bereich der Ausfahrt angeordnete zweite Erfassungseinheit ein erneutes Fernauslesen des RFID-Tags. Die zweite Erfassungseinheit erzeugt daraufhin einen zweiten Datensatz, der die ausgelesene Nutzerkennung, eine Kennung der Ausfahrt der Parkeinrichtung und einen zweiten Zeitstempel umfasst. Dieser zweite Datensatz wird gleichfalls an die Auswerteeinrichtung gesandt. Der Auswerteeinrichtung liegen mithin bezüglich eines erfolgten Parkvorgangs die Einfahrtkennung und die Ausfahrtkennung sowie die zugehörigen Zeitstempel vor. Dabei sind diese Daten mit der eineindeutigen Nutzerkennung verknüpft, die jeweils Bestandteil der von der Auswerteeinrichtung empfangenen Datensätze ist.

Die Auswerteeinrichtung ist Bestandteil des Hintergrundsystems, das die empfangenen Datensätze mit den zuvor bei der Nutzerregistrierung hinterlegten Daten insbesondere zwecks Gebührenabrechnung verknüpften kann. Das Hintergrundsystem verfügt zu diesem Zweck über eine Datenbank, die als Bestandteil der Auswerteeinrichtung ausgebildet sein kann. Auf Basis der durch die Registrierung hinterlegten Daten einerseits und der zu Beginn und zum Ende eines Parkvorgangs von der Auswerteeinrichtung empfangenen Datensätze andererseits kann durch die Auswerteeinrichtung eine Gebührenberechnung und Inrechnungstellung automatisiert durchgeführt werden.

Anstelle eines RFID-Tags zur fernauslesebaren Bereitstellung einer Nutzerkennung kann auch das Kennzeichen eines Fahrzeugs verwendet werden, in welchem Fall die im Bereich einer Einfahrt und einer Ausfahrt vorgesehenen Erfassungseinheiten über entsprechende optische Erfassungsmittel wie zum Beispiel Kameras verfügen. Eine vorherige Nutzerregistrierung kann in diesem Fall in einfacher Weise erfolgen, indem sich der Nutzer beim Hintergrundsystem unter Angabe seines Kennzeichens und seiner Bezahldaten wie zum Beispiel einer Kreditkartennummer anmeldet. Ein im nachfolgenden durchgeführter Parkvorgang kann dann eindeutig einem Kennzeichen zugeordnet werden und die Gebührenabrechnung erfolgt automatisch über die bei der Anmeldung beispielsweise angegebene Kreditkarte.

Aus dem Stand der Technik ist es ferner bekannt, gebührenpflichtige Parkeinrichtungen wie zum Beispiel Parkhäuser oder Parkplätze mit Stromladepunkten auszurüsten. Diese dienen dazu, die von Elektrofahrzeugen mitgeführten Akkumulatoren während eines Parkvorgangs aufladen zu können. Das Stromladen während eines Parkvorgangs ist insbesondere deshalb sinnvoll, weil eine Fahrzeugverwendung in dieser Zeit bestimmungsgemäß nicht stattfindet, ein Stromladen also ohne zusätzlichen Zeit- und Warteaufwand für den Nutzer erfolgen kann.

Verfahren zum Betrieb von Stromladepunkten in einer gebührenpflichtigen Parkeinrichtung sind aus dem Stand der Technik an sich bekannt. So betrifft beispielsweise die EP 2 410 494 A1 ein Verfahren zum Betrieb einer Stromtankstelle einer gebührenpflichtigen Parkeinrichtung, wobei die Stromtankstelle eine Mehrzahl von Stromladepunkten aufweist. Gemäß diesem vorbekannten Verfahren erfolgt ein Freischalten eines Stromladepunktes durch ein Identifikationsmittel in Form beispielsweise einer Magnetstreifenkarte oder eines Chip-Coins, welches der Nutzer beim Einfahren in die Parkeinrichtung als Parkmedium erhält. Das Parkmedium dient mithin nicht nur in schon vorbeschriebener Weise dazu, einen Parkvorgang gebührenpflichtig abzuwickeln, sondern auch dazu, einen Stromladevorgang an einem Stromladepunkt freizuschalten.

Aus dem Stand der Technik ist gemäß der DE 44 14 008 A1 ferner eine Anordnung zur Abgabe von elektrischer Energie an ein Kraftfahrzeug in Form einer Stromzapfsäule bekannt, die über ein Kartenlesegerät verfügt. Dabei kann ein Freischalten der Stromzapfsäule mittels einer Guthabenkarte oder einer Bankkarte erfolgen, die vor einem Stromladen in das Kartenlesegerät der Stromzapfsäule einzuführen ist.

Des Weiteren ist aus der EP 2 199 991 A1 ein System zur Abrechnung von Strom- und Parkgebühren bekannt, demgemäß vorgesehen ist, dass in einem Parkhaus bereitgestellte Stromzapfsäulen an einen Server angeschlossen sind, der einerseits die Stromzapfsäulen und andererseits die Zufahrt von Fahrzeugen zum Parkhaus kontrolliert. Das Freischalten einer Stromzapfsäule erfolgt mittels eines Identifizierungsmittels, das der Nutzer auch zum Einfahren in das Parkhaus nutzt, so zum Beispiel ein Kurzparkticket oder ein Dauerparkticket. Die Stromzapfsäule ist mit einem entsprechenden Lesegerät zum Auslesen des Identifizierungsmittels ausgerüstet. Eine anschließende Tarifberechnung beinhaltet die Parkkosten einerseits sowie die Stromkosten andererseits.

Die US 2011/131083 A1 betrifft ein Verfahren und eine Parkeinrichtung, welche es erlauben, einen Parkvorgang und einen Ladevorgang einander zuzuordnen, um eine einzige Zahltransaktion durchzuführen.

Die vorbekannten Systeme und Verfahren zum Betrieb einer gebührenpflichtigen Parkeinrichtung einerseits sowie einer Stromzapfsäule oder Stromtankstelle andererseits haben sich im alltäglichen Praxiseinsatz zwar bewährt, doch es besteht nach wie vor Verbesserungsbedarf. So ist es insbesondere als nachteilig anzusehen, dass die einem Hintergrundsystem durch vorherige Registrierung bekannte Nutzerkennung auf einem physikalischen Träger wie zum Beispiel einem RFID-Tag angebracht ist, der nicht oder nur mit erheblichem technischen Aufwand einem Stromladepunkt eindeutig zugeordnet werden kann. So gelingt es zwar, beim Einfahren eines Fahrzeugs in eine Parkeinrichtung die Nutzerkennung aus einem vom Fahrzeug mitgeführten RFID-Tag fernauszulesen, so dass die Nutzerkennung samt Zeitstempel einer Einfahrt der Parkeinrichtung exakt zugeordnet werden kann, doch ein solches Fernauslesen ist nicht dazu geeignet, exakt selektieren zu können, auf welcher Stellfläche von mehreren nebeneinander angeordneten Stellflächen das Fahrzeug nutzerseitig abgestellt ist.

Dementsprechend gelingt es auch nicht, das Fahrzeug einem bestimmten Stromladepunkt exakt zuzuordnen, zumal von einer Stromladeeinrichtung wie zum Beispiel einer Stromzapfsäule typischerweise eine Mehrzahl von zeitgleich verwendbaren Stromladepunkten zur Verfügung gestellt werden. Das Fernauslesen eines RFID-Tags ist zur eindeutigen Bestimmung eines einzelnen Stromladepunktes nicht selektiv genug.

Vergleichbares gilt für das Erkennen von Kennzeichen. Auch diese sind in schon vorbeschriebener Weise für die Nutzeridentifizierung beim Einfahren in die Parkeinrichtung verwendbar, doch eine eindeutige Zuordnung eines Fahrzeugs zu einem Stromladepunkt ist mittels eines Kennzeichens nicht oder nur mit erheblichem technischem Aufwand möglich. Dies ist auch dadurch begründet, dass ein von einem Stromladepunkt bereitgestelltes Stromladekabel aus Gründen eines benutzerfreundlichen Handlings zumeist eine solche Länge aufweist, dass auch der elektrische Anschluss eines Fahrzeugs an den Stromladepunkt ermöglicht ist, das auf einem zum Stromladepunkt weiter entfernten Stellplatz abgestellt ist. Es ist insoweit auch nicht ausreichend, jeden einzelnen Stellplatz mit einer optischen Erfassungseinheit zur Kennzeichnungsermittlung auszurüsten.

Im Ergebnis sind die parkmediumfreien Systeme, die auf der automatischen Nutzererkennung beim Einfahren in die Parkeinrichtung basieren, nicht dazu geeignet, eine exakte Zuordnung eines von einem Nutzer während eines Parkvorgangs genutzten Stromladepunktes vornehmen zu können. Es ist deshalb die **Aufgabe** der Erfindung, ein Verfahren der gattungsgemäßen Art dahingehend weiterzuentwickeln, dass eine eindeutige Zuordnung eines Einfahrtvorgangs eines Fahrzeugs zu einem unter Umständen nutzerseitig mit demselben Fahrzeug in Verwendung genommenen Stromladepunkt ermöglicht wird.

Zur **Lösung** dieser Aufgabe wird mit der Erfindung ein gattungsgemäßes Verfahren vorgeschlagen, das sich durch weitere Verfahrensschritte wie folgt auszeichnet:
- Übermitteln nutzerbezogener Daten an die Auswerteeinrichtung durch den Nutzer,
- Erzeugen einer Transaktionskennung durch die Auswerteeinrichtung und Versenden der Transaktionskennung an den Nutzer, wobei die Transaktionskennung nach einem Empfangen des ersten Datensatzes durch die Auswerteeinrichtung entweder automatisch oder auf vorherige Anfrage durch den Nutzer erzeugt wird und die erzeugte Transaktionskennung dem Nutzer mittels der nutzerbezogenen Daten zugeordnet wird,
- Initialisieren eines Stromladens an einem Stromladepunkt durch Übermitteln der Transaktionskennung an eine Nutzerschnittstelle einer den Stromladepunkt bereitstellenden Stromladeeinrichtung,
- Empfangen eines dritten Datensatzes von der den Stromladepunkt bereitstellenden Stromladeeinrichtung durch die Auswerteeinrichtung, wobei der dritte Datensatz die Transaktionskennung, eine Kennung des Stromladepunkts und einen dritten Zeitstempel umfasst,
- Empfangen eines vierten Datensatzes von der den Stromladepunkt bereitstellenden Stromladeeinrichtung durch die Auswerteeinrichtung, wobei der vierte Datensatz die Kennung des Stromladepunkts und einen vierten Zeitstempel umfasst und
- in einem Auswertevorgang Auswerten der empfangenen Datensätze durch die Auswerteeinrichtung, wobei mittels des ersten und des zweiten Datensatzes ein Parkvorgang eines Fahrzeugs und mittels des dritten und des vierten Datensatzes ein Stromladevorgang ermittelt werden und wobei der Stromladevorgang dem Parkvorgang anhand der Transaktionskennung zugeordnet wird.

Zum Zwecke der erfindungsgemäßen Verfahrensdurchführung registriert sich der Nutzer an dem Hintergrundsystem unter anderem mit nutzerbezogenen Daten, beispielsweise mit der Telefonnummer eines von ihm zur Verfahrensdurchführung mitzuführenden mobilen Endgeräts, beispielsweise eines Handys oder Smartphones. Die erfindungsgemäße Verfahrensdurchführung sieht deshalb vor, dass in einem ersten weiteren Verfahrensschritt eine Übermittlung nutzerbezogener Daten, beispielsweise einer Telefonnummer eines vom Nutzer der Parkeinrichtung mitgeführten mobilen Endgerätes, an die Auswerteeinrichtung stattfindet. Diese Übermittlung erfolgt durch den Nutzer. Dabei findet die Übermittlung der nutzerbezogenen Daten, beispielsweise der Telefonnummer, an das Hintergrundsystem bzw. an die Auswerteeinrichtung des Hintergrundsystems vorzugsweise vom mobilen Endgerät des Nutzers statt.

Die Übermittlung der nutzerbezogenen Daten, beispielsweise der Telefonnummer, kann gemäß einer ersten Alternative vor dem Einfahren in die Parkeinrichtung durch eine vorherige Nutzerregistrierung an die Auswerteeinrichtung übermittelt werden. Die Übermittlung der nutzerbezogenen Daten, beispielsweise der Telefonnummer, an die Auswerteeinrichtung findet mithin gleichzeitig mit der Übermittlung weiterer Nutzerdaten an die Auswerteeinrichtung im Rahmen einer Nutzerregistrierung statt. Der Nutzer gibt in diesem Falle beispielsweise nicht nur ein Kennzeichen und eine Kreditkartennummer, sondern auch nutzerbezogene Daten, beispielsweise eine Telefonnummer, an. Diese an die Auswerteeinrichtung übermittelten Nutzerdaten werden in einer Datenbank gespeichert. Dabei sind die nutzerbezogenen Daten, wie beispielsweise Telefonnummer, und weitere nutzerseitigen Daten zur Gebührenrichtung einer eineindeutigen Nutzerkennung zugeordnet, die beim Einfahren in die Parkeinrichtung automatisch erfasst wird. Die eineindeutige Nutzerkennung kann dabei eine fahrzeugfest montierte Nutzerkennung sein, wie z.B. ein in das Fahrzeug eingeklebtes, fernauslesbares RFID-Tag, das Kennzeichen des Fahrzeugs, ein optischer Code oder dergleichen. Die eineindeutige Nutzerkennung kann alternativ eine nicht fahrzeugfeste Nutzerkennung sein, wie eine (lose) im Fahrzeug befindliche, fernauslesbare Transponderkarte, eine vom Nutzer (Fahrer) an der Einfahrt einer Erfassungseinheit zu präsentierende Nahfeld-Transponderkarte, Magnetstreifenkarte oder ein optischer Code. Wesentlich ist erfindungsgemäß, dass der Nutzer oder das Fahrzeug die Nutzerkennung auf einem physischen Träger mitbringt und dass Erfassungseinheiten an der Einfahrt und an der Ausfahrt der Parkeinrichtung die Nutzerkennung auslesen können.

Gemäß einer zweiten Alternative werden die nutzerbezogenen Daten, wie beispielsweise die Telefonnummer, beim Einfahren in die Parkeinrichtung als Bestandteil des ersten Datensatzes an die Auswerteeinrichtung übermittelt. Gemäß dieser Alternative findet also keine vorherige Übermittlung nutzerbezogener Daten, wie beispielsweise der Telefonnummer, im Rahmen einer Registrierung statt. Vielmehr wird erst zu Beginn eines jeden Parkvorgangs beim Einfahren in die Parkeinrichtung eine Übermittlung nutzerbezogener Daten, wie beispielsweise der Telefonnummer, eingeleitet. Dabei erfolgt die Übermittlung der nutzerbezogenen Daten vorzugsweise als Teil eines ohnehin an die Auswerteeinrichtung zu übermittelnden ersten Datensatzes. Zu diesem Zweck kann beispielsweise vorgesehen sein, dass die im Bereich der Einfahrt vorgesehene Erfassungseinheit zur Erzeugung eines ersten Datensatzes nutzerbezogene Daten, wie beispielsweise die Telefonnummer des vom Nutzer mitgeführten mobilen Endgerätes, abfragt. Die Übermittlung der nutzerbezogenen Daten, beispielsweise der Telefonnummer, an die Erfassungseinheit kann entweder automatisch vom mobilen Endgerät selbst aus erfolgen oder durch manuelle Nutzereingabe. Von Vorteil dieser zweiten Alternative ist, dass unterschiedliche nutzerbezogene Daten, wie beispielsweise Telefonnummern, d.h. unterschiedliche mobile Endgeräte, seitens des Nutzers verwendet werden können.

Alternativ kann auch vorgesehen sein, dass nutzerbezogene Daten, wie beispielsweise eine Telefonnummer, im Rahmen einer Registrierung an die Auswerteeinrichtung übermittelt werden, und zwar entsprechend der ersten Alternative, dass aber im Bedarfsfall beim Einfahren in die Parkeinrichtung die hinterlegten nutzerbezogenen Daten durch neue nutzerbezogene Daten gemäß zweiter Alternative ersetzt werden können. So lässt sich beispielsweise zwischen einem beruflich genutzten Telefon einerseits und einem privat genutzten Telefon andererseits unterscheiden.

Beim Einfahren in die Parkeinrichtung wird mittels der im Bereich der Einfahrt vorgesehenen Erfassungseinheit die Nutzerkennung in an sich bekannter Weise erfasst, beispielsweise durch Fernauslesen eines RFID-Tags oder durch eine Kennzeichenerfassung. Mit dem Erfassen der Nutzerkennung beginnt der Parkvorgang, und in an sich bekannter Weise wird ein erster Datensatz erzeugt, der von der Auswerteeinrichtung empfangen wird.

Gemäß dem erfindungsgemäßen Verfahren wird gemäß einem weiteren Verfahrensschritt nach Empfangen des ersten Datensatzes durch die Auswerteeinrichtung eine Transaktionskennung durch die Auswerteeinrichtung erzeugt. Diese Transaktionskennung wird vorzugsweise an das vom Nutzer mitgeführte mobile Endgerät versendet. Dies geschieht unter Nutzung der der Auswerteeinrichtung zuvor übermittelten nutzerbezogenen Daten, beispielsweise der Telefonnummer des vom Nutzer mitgeführten mobilen Endgerätes.

Es ist erfindungsgemäß vorgesehen, dass der Nutzer nutzerbezogene Daten an die Auswerteeinrichtung übermittelt, die dazu dienen, eine von der Auswerteeinrichtung erzeugte Transaktionskennung dem Nutzer mittels der nutzerbezogenen Daten zuzuordnen. Wie dies im Weiteren noch näher erläutert werden wird, kann die Transaktionskennung vom Nutzer optional für einen Stromladevorgang an einem Stromladepunkt genutzt werden. Dabei gestatten es die nutzerbezogenen Daten und die den Nutzerdaten eineindeutig zugeordnete Transaktionskennung, dass ein Stromladevorgang einem Parkvorgang zwecks gemeinsamer Gebührenabrechnung zugeordnet werden kann.

Gemäß einer bevorzugten Ausführungsform der Erfindung weisen die nutzerbezogenen Daten eine Kennung auf, die ein vom Nutzer der Parkeinrichtung mitgeführtes mobiles Endgerät identifiziert. Dies gestattet eine direkte Kommunikation eines Hintergrundsystems der Parkeinrichtung mit dem Nutzer. Als eine solche Kennung kann beispielsweise die Telefonnummer des mobilen Endgeräts Verwendung finden, sodass die Transaktionskennung direkt an das vom Nutzer mitgeführte Endgerät übersandt werden kann. Es ist so eine einfache und sichere Handhabung gestattet, weshalb die Verwendung einer Telefonnummer auch bevorzugt ist.

Die Erfindung ist aber nicht auf eine Telefonnummer als nutzerbezogene Daten beschränkt. Es können auch andere nutzerbezogene Daten Verwendung finden. Von erfindungswesentlicher Bedeutung ist allein, dass eine Zuordnung der auf Basis der nutzerbezogenen Daten erzeugten Transaktionskennung zum Nutzer gestattet ist. "Nutzerbezogene Daten" in diesem Sinne können mithin auch eine E-Mail-Adresse, eine Funkkennung, beispielsweise eine Bluetooth- oder WLAN-Kennung, MAC-Adresse, eine Kennung des mobilen Endgeräts (IMEI-Nummer) oder die Instanz einer mobilen App (eine mobile Anwendung installiert auf einem individuellen mobilen Endgerät) oder dergleichen, sein. Auch eine Gesichts- oder Stimmerkennung ist in diesem Sinne möglich. So kann beispielsweise vorgesehen sein, dass der Nutzer bei einer Einfahrt in die Parkeinrichtung systemseitig danach befragt wird, ob während des Parkvorgangs ein Stromladevorgang stattfinden soll. Dies kann der Nutzer im Falle einer Gesichtserkennung durch eine entsprechende Gestik oder im Falle einer Stimmerkennung akustisch ablehnen oder bestätigen. Im Falle einer Bestätigung wird in der nachfolgend noch näher beschriebenen Weise eine Transaktionskennung erzeugt und an den Nutzer versandt. Ein solches Versenden kann beispielsweise per E-Mail an eine dem System bei einer Registrierung zuvor mitgeteilte E-Mail-Adresse oder per Kurznachricht an eine dem System bei einer Registrierung zuvor bekannt gemachte Telefonnummer eines mobilen Endgeräts stattfinden. Auch eine Kommunikationsverbindung mittels einer App-Anwendung ist in diesem Sinne möglich.

Das Übermitteln der nutzerbezogenen Daten findet vorzugsweise zu Beginn eines Parkvorgangs statt, beispielsweise bei einem Einfahren in die Parkeinrichtung. Im Rahmen der Erfindung ist es aber auch möglich, dass die Übermittlung der nutzerbezogenen Daten zu einem späteren Zeitpunkt stattfindet, beispielsweise unmittelbar vor Beginn eines Stromladevorgangs. In diesem Fall kann die Übermittlung der nutzerbezogenen Daten direkt an einem Stromladepunkt stattfinden. Ein Stromladepunkt ist zu diesem Zweck mit einer entsprechenden Kommunikationseinrichtung ausgerüstet, die ein Übermitteln der nutzerbezogenen Daten durch den Nutzer und ein Weitersenden an die Auswerteeinrichtung ermöglicht.

Wie im Weiteren noch näher beschrieben werden wird, dient die Transaktionskennung einem Nutzer dazu, einen optionalen Stromladevorgang an einem Stromladepunkt einem Parkvorgang zuzuordnen, so dass ohne ein ausgegebenes Parkmedium ("Kurzparkerticket") eine gemeinsame Abrechnung fälliger Parkgebühren einerseits sowie fälliger Stromgebühren andererseits automatisch erfolgen kann.

Gemäß einer ersten Alternative ist in diesem Zusammenhang vorgesehen, dass die Transaktionskennung nach einem Empfangen des ersten Datensatzes durch die Auswerteeinrichtung automatisch erzeugt und vorzugsweise an das vom Nutzer mitgeführte mobile Endgerät übersendet wird. Demnach erhält der Nutzer automatisch mit Beginn eines Parkvorgangs eine Transaktionskennung, so dass er im Weiteren im Bedarfsfall unter Verwendung dieser Transaktionskennung ein Stromladen vornehmen kann. Sollte eine nutzerseitige Verwendung der Transaktionskennung nicht stattfinden, so wird auf Seiten des Hintergrundsystems die Verknüpfung dieser Transaktionskennung bei Ende des Parkvorgangs aufgehoben, und die Transaktionskennung (d.h. genau dieser Wert der Transaktionskennung) kann für einen anderen Parkvorgang wiederverwendet werden.

Dabei versteht es sich, dass dieselbe Transaktionskennung in einer Parkvorrichtung nicht gleichzeitig mehreren Parktransaktionen verwendbar zugeordnet werden kann. Wenn also beispielweise für einen Parkvorgang in einem bestimmten Parkhaus eine erste Transaktionskennung "123456" ausgegeben wird, dann kann in demselben Parkhaus dieselbe Transaktionskennung erst dann erneut ausgegeben werden, wenn die Transaktionskennung wiederverwendbar geworden ist.

Eine Transaktionskennung ist dabei verwendbar, wenn mit ihr ein Stromladevorgang erfindungsgemäß erfolgreich begonnen werden kann.

Eine einmal für eine bestimmte Parkvorrichtung ausgegebene Transaktionskennung wird wiederverwendbar (d.h. sie kann vom Hintergrundsystem für dieselbe Parkeinrichtung erneut ausgegeben werden) insbesondere beim Frühesten des Eintretens eines der folgenden Ereignisse: Der zur ausgegebenen Transaktionskennung gehörige Parkvorgang ist beendet (also das zum Parkvorgang gehörige Fahrzeug ist ausgefahren), die ausgegebene Transaktionskennung ist durch Ablauf einer Gültigkeitsdauer ungültig geworden (siehe unten) oder die ausgegebene Transaktionskennung wird für einen Stromladevorgang verwendet.

Gemäß einer zweiten Alternative ist vorgesehen, dass die Transaktionskennung nach einem Empfang des ersten Datensatzes auf vorherige Anfrage durch den Nutzer erzeugt und alsdann vorzugsweise an das vom Nutzer mitgeführte mobile Endgerät übersendet wird. Gemäß dieser Alternative wird also eine Transaktionskennung nicht automatisch beim Einfahren erzeugt und an das mobile Endgerät des Nutzers übersandt, sondern sowohl die Erzeugung als auch die Übersendung der Transaktionskennung findet erst nach einer vorherigen Anfrage durch den Nutzer statt. So kann in diesem Zusammenhang beispielsweise vorgesehen sein, dass seitens der Auswerteeinrichtung beim Einfahren eine Anfrage an den Nutzer erzeugt und an das vom Nutzer mitgeführte mobile Endgerät übermittelt wird. Mit dieser Anfrage informiert das Hintergrundsystem den Nutzer über die Möglichkeit des Stromladens und erfragt, ob der Nutzer von dieser Möglichkeit Gebrauch machen möchte. Wird dies vom Nutzer bestätigt, so gilt dies als nutzerseitige Anfrage, woraufhin die Transaktionskennung erzeugt und an das mobile Endgerät des Nutzers übermittelt wird.

Erfindungsgemäß ist gemäß einem weiteren Verfahrensschritt vorgesehen, dass das Initialisieren eines Stromladens an einem Stromladepunkt durch Übermitteln der Transaktionskennung an eine Nutzerschnittstelle einer den Stromladepunkt bereitstellenden Stromladeeinrichtung stattfindet. Mit der nutzerseitigen Übermittlung der zuvor erhaltenen Transaktionskennung an eine Nutzerschnittstelle wird ein vom Nutzer gewünschter Stromladevorgang eingeleitet. Die Nutzerschnittstelle ist Bestandteil einer den Stromladepunkt bereitstellenden Stromladeeinrichtung. Bei der Stromladeeinrichtung kann es sich beispielsweise um eine sogenannte Stromladesäule handeln. Diese kann eine Mehrzahl von Stromladepunkten bereitstellen. Im bestimmungsgemäßen Verwendungsfall kann mithin eine Mehrzahl von Fahrzeugen an ein und dieselbe Stromladeeinrichtung angeschlossen sein, wobei jedem Fahrzeug ein bestimmter Stromladepunkt zugeordnet ist, über den das Fahrzeug bzw. der vom Fahrzeug mitgeführte Akkumulator Strom bezieht.

Zum Initialisieren eines Stromladens ist nutzerseitig die Transaktionskennung an die Nutzerschnittstelle der Stromladeeinrichtung zu übermitteln. Diese kann je nach Ausgestaltung der Transaktionskennung auf unterschiedliche Weise erfolgen.

Die Transaktionskennung kann in Form eines Zahlencodes, eines QR-Codes und/oder eines Barcodes verwendet werden. Zur Übermittlung der Transaktionskennung an die Nutzerschnittstelle der Stromladeeinrichtung kann die Nutzerschnittstelle beispielsweise über ein Zahlentastenfeld verfügen. Sofern die Transaktionskennung in Form eines Zahlencodes vorliegt, kann der Nutzer diesen von einem Display seines Endgerätes ablesen und über das Zahlentastenfeld der Nutzerschnittstelle eingeben.

Alternativ wird die Transaktionskennung in Form eines QR-Codes oder Barcodes verwendet. In diesem Fall verfügt die Nutzerschnittstelle der Stromladeeinrichtung über ein entsprechendes Lesegerät in der Ausgestaltung eines Scanners. Die vom mobilen Endgerät angezeigte Transaktionskennung kann dann in einfacher Weise von der Nutzerschnittstelle erfasst und durch Scannen an die Nutzerschnittstelle übermittelt werden.

Gemäß einer weiteren Alternative kann vorgesehen sein, dass die Transaktionskennung drahtlos beispielsweise per Nahfunk vom mobilen Endgerät an die Nutzerschnittstelle der Stromladeeinrichtung übermittelt wird, beispielsweise mittels Bluetooth. Eine solche Übermittlung kann auch automatisiert erfolgen, beispielsweise dann, wenn sich der Nutzer mit seinem mobilen Endgerät einem bestimmten, ggf. auch vorausgewählten Stromladepunkt bis auf einen gewissen Abstand nähert. Die Stromladeeinrichtung ist zu diesem Zweck mit einer entsprechenden Sensorik auszurüsten.

Sobald das Stromladen durch Übermittlung der Transaktionskennung initialisiert ist, hat der Nutzer einen Stromladepunkt auszuwählen. Dies kann durch eine entsprechende Anwahl an der Stromladeeinrichtung erfolgen oder dadurch, dass der Nutzer sein Fahrzeug mit einem Stromladepunkt elektrisch koppelt. Diese elektrische Kopplung wird seitens der Stromladeeinrichtung erkannt und als Auswahl des entsprechenden Stromladepunktes interpretiert. Sobald die nutzerseitige Auswahl des Stromladepunktes und das Initialisieren eines Stromladens durch Übermittlung der Transaktionskennung stattgefunden haben, erzeugt die Stromladeeinrichtung automatisch einen dritten Datensatz, der an die Auswerteeinrichtung übermittelt und von dieser empfangen wird. Dieser dritte Datensatz umfasst die Transaktionskennung, die Kennung des nutzerseitig ausgewählten Stromladepunktes sowie einen dritten Zeitstempel.

Mit Übersendung des dritten Datensatzes an die Auswerteeinrichtung kann das Stromladen beginnen. Dazu wird zunächst die mit Übermittlung des dritten Datensatzes an die Auswerteeinrichtung übersandte Transaktionskennung durch die Auswerteeinrichtung auf Gültigkeit überprüft wird. Ein Stromladevorgang wird in diesem Fall nur dann eingeleitet, wenn diese Gültigkeitsprüfung positiv ausfällt. Sollte die Gültigkeitsprüfung indes ergeben, dass die Transaktionskennung nicht oder nicht mehr gültig ist, so unterbleibt der nutzerseitig angeforderte Stromladevorgang, was dem Nutzer vorzugsweise auch angezeigt wird.

Es ist in diesem Zusammenhang gemäß einem weiteren Merkmal der Erfindung vorgesehen, dass zu der Transaktionskennung bei Erzeugung eine frei vorgebbare Gültigkeitsdauer generiert wird und in der Auswerteeinrichtung gespeichert wird. So kann die Gültigkeitsdauer beispielsweise auf zehn Minuten, fünfzehn Minuten oder dreißig Minuten beschränkt sein. Eine solche Beschränkung ist unter anderem deshalb sinnvoll, weil davon auszugehen ist, dass bei einer bestimmungsgemäßen Benutzung der Parkeinrichtung der Nutzer eine mit einem Stromladepunkt ausgerüstete Stellefläche unmittelbar nach dem Einfahren in die Parkeinrichtung aufsuchen, sein Fahrzeug anschließen und alsdann die Parkvorrichtung verlassen wird.

Der Gültigkeitsbeginn der Transaktionskennung kann mit dem Zeitpunkt des Einfahrens in die Parkeinrichtung gleichgesetzt werden, der Einfachheit halber anhand des mit dem ersten Datensatz übermittelten Zeitstempels. Zur Ermittlung, ob die Gültigkeitsdauer bei einem Initialisieren eines Stromladens noch gegeben ist oder nicht, kann ein Vergleich von erstem Zeitstempel und drittem Zeitstempel stattfinden. Ergibt dieser Vergleich, dass die vorgegebene Gültigkeitsdauer der Transaktionskennung noch nicht abgelaufen ist, so gilt die Transaktionskennung noch als gültig.

Es kann des Weiteren vorgesehen sein, dass die Prüfung der Transaktionskennung auf Gültigkeit eine Prüfung auf eine eindeutige Zuordnung der Transaktionskennung zu einem Einfahrvorgang und eine Prüfung auf bestehende Gültigkeitsdauer umfasst. Demnach wird also nicht nur die Gültigkeitsdauer überprüft, sondern es wird auch eine Prüfung dahingehend unternommen, dass die eindeutige Zuordnung der Transaktionskennung zu einem Einfahrvorgang festgestellt wird.

Nach erfolgreich abgeschlossener Prüfung der Transaktionskennung wird im Falle der positiven Prüfung der ausgewählte Ladepunkt freigegeben, und der Stromladevorgang kann beginnen. Dabei kann das Hintergrundsystem den Stromladevorgang anhand der Transaktionskennung mit dem Einfahrvorgang verknüpfen. Dies erlaubt eine spätere gemeinsame Abrechnung von Parkvorgang und Stromladevorgang. Dabei erfolgt die Einleitung des Stromladevorgangs sowie die spätere Verknüpfung von Parkvorgang und Stromladevorgang parkmediumfrei, d.h. es ist im Unterschied beispielsweise zur Lehre nach der EP 2 410 494 A1 nicht die Verwendung von Magnetstreifenkarten, Chip-Coins und/oder dgl. Parkmedien erforderlich.

Die erfindungsgemäße Verfahrensdurchführung lässt sich zudem in vorteilhafter Weise in Kombination mit schon bestehenden Systemen nutzen, ohne dass eine technisch aufwendige Modifikation erforderlich wäre. Denn die Verknüpfung von Parkvorgang und Stromladevorgang erfolgt anhand der Transaktionskennung, die softwareseitig vorzugsweise automatisch erzeugt und an das vom Nutzer mitgeführte mobile Endgerät übertragen wird. Da vor dem Einfahren in die Parkeinrichtung eine Registrierung des Nutzers stattgefunden hat, ist die Zuordnung von Nutzer, d.h. Nutzerkennung, und Transaktionskennung eindeutig. Ein Stromladevorgang findet im Nachgang einer Übermittlung dieser eindeutigen Transaktionskennung an die Auswerteeinrichtung statt, so dass im Weiteren automatisch eine Verknüpfung und Abrechnung von Parkvorgang und Ladevorgang vorgenommen werden kann.

Erfindungsgemäß ist in einem weiteren Verfahrensschritt vorgesehen, dass von der den Stromladepunkt bereitstellenden Stromladeinrichtung ein vierter Datensatz erzeugt und an die Auswerteeinrichtung übermittelt wird, die diesen empfängt.

Mit Übersendung und Empfang des vierten Datensatzes ist der Stromladevorgang beendet. Der vierte Datensatz umfasst zumindest die Kennung des Stromladepunktes und einen vierten Zeitstempel. Anhand der Kennung des Stromladepunktes kann der Stromfluss vom Stromladepunkt zum daran angeschlossenen Fahrzeug unterbrochen werden. Anhand des vierten Zeitstempels kann im Vergleich mit dem dritten Zeitstempel, d.h. dem Zeitstempel der zu Beginn des Stromladevorgangs an die Auswerteeinrichtung übermittelt wurde, die Stromladedauer bestimmt werden. Auf dieser Basis kann unter Zugrundelegung einer vorgebbaren Tariftabelle eine zeitabhängige Stromgebühr ermittelt werden. Weiter kann der vierte Datensatz die geladene Energiemenge umfassen. Auf dieser Basis kann unter Zugrundelegung einer vorgebbaren Tariftabelle eine energieabhängige Stromgebühr ermittelt werden. Optional kann mit dem vierten Datensatz auch noch die Transaktionskennung übersandt werden. Somit ist eine weitere Prüfung insbesondere auf Plausibilität möglich.

Gemäß der erfindungsgemäßen Verfahrensdurchführung werden an die Auswerteeinrichtung insgesamt vier Datensätze übermittelt. Der erste und der zweite Datensatz dienen der Erfassung des Parkvorgangs. Dabei findet die Übermittlung des ersten Datensatzes zu Beginn des Parkvorgangs, d.h. beim Einfahren in die Parkeinrichtung, statt. Beim Ausfahren aus der Parkeinrichtung, d.h. mit Beendigung des Parkvorgangs, wird der zweite Datensatz an die Auswerteeinheit übermittelt. Anhand der in den beiden Datensätzen vorhandenen Nutzerkennung kann eine eindeutige Zuordnung des Parkvorgangs zu einem Nutzer stattfinden. Anhand der mit den Datensätzen jeweils übermittelten Zeitstempel lässt sich die exakte Parkdauer ermitteln.

Bei einem Stromladen werden weitere Datensätze an die Auswerteeinheit übermittelt, nämlich ein dritter Datensatz und ein vierter Datensatz. Der dritte Datensatz wird mit Beginn des Stromladens an die Auswerteeinrichtung übersandt. Mit einer Beendigung des Stromladevorgangs wird der vierte Datensatz an die Auswerteeinrichtung übertragen. Die mit dem dritten Datensatz übersandte Transaktionskennung erlaubt eine direkte Verknüpfung des vom ersten und zweiten Datensatz erfassten Parkvorgangs mit dem vom dritten und vierten Datensatz erfassten Stromladevorgangs. Damit kann auch der Stromladevorgang einem Nutzer eindeutig zugeordnet werden, und zwar ohne dass zu Beginn des Ladevorgangs eine erneute Nutzererfassung erfolgt. Damit wird dem im Stand der Technik anhaftenden Nachteil begegnet, dass vorbekannte Parksysteme nicht dazu ausgerüstet sind, eine hinreichend genaue selektive Erfassung eines Fahrzeuges auf einem Stellplatz und/oder eines einem Stellplatz zugeordneten Ladepunktes vornehmen zu können. Die erfindungsgemäße Verfahrensdurchführung überwindet mithin diesen dem Stand der Technik anhaftenden Nachteil und macht es möglich, Bestandsysteme auch für die Durchführung und Zuordnung eines Stromladevorgangs zu einem Parkvorgang zu verwenden.

In einem letzten Verfahrensschritt sieht das erfindungsgemäße Verfahren vor, dass in einem Auswertevorgang die empfangenen Datensätze durch die Auswerteeinheit ausgewertet werden, wobei mittels des ersten und des zweiten Datensatzes ein Parkvorgang und mittels des dritten und des vierten Datensatzes ein Stromladevorgang ermittelt werden und wobei der Stromladevorgang dem Parkvorgang anhand der Transaktionskennung zugeordnet wird.

Gemäß dem letzten Verfahrensschritt werden die empfangenen Datensätze ausgewertet, wobei eine Zuordnung von Parkvorgang und Stromladevorgang stattfindet. In vorteilhafter Weise ist so eine Verknüpfung erreicht, und zwar anhand der Transaktionskennung, die eine eindeutige Zuordnung auch des Stromladevorgangs zum zugehörigen Nutzer gestattet. Dies erlaubt eine Inrechnungstellung der angefallenen Park- und Stromgebühren an den Nutzer in nur einem Rechnungsvorgang. Dabei erfolgen die gesamte Abwicklung und auch die Verknüpfung von Parkvorgang und Stromladevorgang automatisch und manipulationssicher. Da in vorteilhafter Weise eine Anwendung der erfindungsgemäßen Verfahrensdurchführung auch bei bestehenden Parksystemen gestattet ist, kann in einfacher Weise eine Nachrüstung erfolgen.

Mit der Erfindung wird des Weiteren vorgeschlagen eine Parkeinrichtung, insbesondere eine gebührenpflichtige Parkeinrichtung für wenigstens teilelektrisch betriebene Fahrzeuge, mit einer Mehrzahl von Stromladepunkten, vorzugsweise eine Parkeinrichtung zur Durchführung des vorstehend erläuterten Verfahrens. Die erfindungsgemäße Parkeinrichtung umfasst wie folgt:
- eine Auswerteeinrichtung,
- die eine Empfangseinheit, eine Transaktionseinheit und eine Auswerteeinheit aufweist,
- wobei die Empfangseinheit eingerichtet ist zum Empfang eines ersten Datensatzes, umfassend eine einen Nutzer der Parkeinrichtung identifizierende Kennung, eine Kennung der Einfahrt der Parkeinrichtung und einen ersten Zeitstempel, eines zweiten Datensatzes, umfassend die den Nutzer der Parkeinrichtung identifizierende Kennung, eine Kennung der Ausfahrt der Parkeinrichtung und einen zweiten Zeitstempel, und nutzerbezogene Daten eines Nutzers der Parkeinrichtung, insbesondere einer Telefonnummer eines von einem Nutzer der Parkeinrichtung mitgeführten mobilen Endgeräts,
- wobei die Transaktionseinheit eingerichtet ist zum Erzeugen und Versenden einer Transaktionskennung an den Nutzer der Parkeinrichtung, insbesondere an das vom Nutzer der Parkeinrichtung mitgeführte mobile Endgerät, wobei die Transaktionskennung nach einem Empfangen des ersten Datensatzes durch die Auswerteeinrichtung entweder automatisch oder auf vorherige Anfrage durch den Nutzer erzeugt wird und die erzeugte Transaktionskennung dem Nutzer mittels der nutzerbezogenen Daten zugeordnet wird,
- wobei die Empfangseinheit ferner eingerichtet ist zum Empfang eines dritten Datensatzes, umfassend die Transaktionskennung, eine Kennung des Stromladepunkts und einen dritten Zeitstempel, und eines vierten Datensatzes, umfassend die Kennung des Stromladepunkts und einen vierten Zeitstempel,
- und wobei die Auswerteeinheit eingerichtet ist zum Auswerten der empfangenen Datensätze in einem Auswertevorgang, wobei mittels des ersten und des zweiten Datensatzes ein Parkvorgang und mittels des dritten und des vierten Datensatzes ein Stromladevorgang ermittelt werden und wobei der Stromladevorgang dem Parkvorgang anhand der Transaktionskennung zugeordnet wird.

Die erfindungsgemäße Parkeinrichtung verfügt über eine Auswerteeinrichtung. Diese ist Teil eines Hintergrundsystems, wobei auch eine parkeinrichtungsübergreifende Verwendung stattfinden kann. Alternativ ist je Parkeinrichtung eine parkeinrichtungseigene Auswerteeinrichtung vorgesehen. Dabei können sowohl bei einer parkeinrichtungsübergreifenden als auch bei einer parkeinrichtungseigenen Verwendung einer Auswerteeinrichtung zumindest Teile der Auswerteausrichtung entfernt von der Parkeinrichtung ausgebildet sein. So verfügt die Auswerteeinrichtung beispielsweise über eine Datenbank. Bei einer parkeinrichtungsübergreifenden Verwendung der Auswerteeinrichtung bietet es sich hinsichtlich einer solchen Datenbank an, genau eine Datenbank für eine Mehrzahl von Parkeinrichtungen vorzusehen, anstelle einer Datenbank je Parkeinrichtung. Die Installations- und Unterhaltungskosten können so minimiert werden.

Die Auswerteeinrichtung verfügt erfindungsgemäß zumindest über eine Empfangseinheit, eine Transaktionseinheit und eine Auswerteeinheit. Optional können ferner eine Prüfeinheit, eine Sendeeinheit und eine Abrechnungseinheit vorgesehen sein.

Die Empfangseinheit der Auswerteeinrichtung ist erfindungsgemäß zum Empfang eines ersten Datensatzes, eines zweiten Datensatzes und nutzerbezogener Daten, beispielsweise einer Telefonnummer eines von einem Nutzer der Parkeinrichtung mitgeführten mobilen Endgerätes, eingerichtet. Dabei umfassen der erste Datensatz eine einen Nutzer der Parkeinrichtung identifizierende Kennung, eine Kennung der Einfahrt der Parkeinrichtung und einen ersten Zeitstempel, und der zweite Datensatz die den Nutzer der Parkeinrichtung identifizierende Kennung, eine Kennung der Ausfahrt der Parkeinrichtung und einen zweiten Zeitstempel.

Der erste Datensatz wird von einer parkeinrichtungsseitigen Erfassungseinheit erzeugt, die im Bereich der Einfahrt der Parkeinrichtung angeordnet ist. Diese Erfassungseinheit erfasst die Nutzerkennung beim Einfahren des Nutzers in die Parkeinrichtung. Es werden die Kennung der Einfahrt und ein erster Zeitstempel ergänzt und zusammen mit der erfassten Nutzerkennung als erster Datensatz an die Auswerteeinrichtung übersandt. Seitens der Auswerteeinrichtung dient die Empfangseinheit dazu, den von der Erfassungseinheit erzeugten und übersandten ersten Datensatz zu empfangen.

Der zweite Datensatz wird ebenfalls von einer parkeinrichtungsseitigen Erfassungseinheit erzeugt und an die Auswerteeinrichtung übersandt. Diese zweite Erfassungseinheit ist im Bereich der Ausfahrt der Parkeinrichtung angeordnet. Diese erfasst beim Ausfahren des Nutzers die Nutzerkennung und ergänzt diese um eine Ausfahrtkennung und einen zweiten Zeitstempel zum zweiten Datensatz. Dieser wird an die Auswerteeinrichtung übertragen und von dieser empfangen, wobei der Empfang des zweiten Datensatzes durch die Empfangseinheit der Auswerteeinrichtung erfolgt.

Die Empfangseinheit ist ferner dazu eingerichtet, nutzerbezogene Daten, insbesondere eine Telefonnummer eines von einem Nutzer der Parkeinrichtung mitgeführten mobilen Endgerätes, zu empfangen. Dabei kann die Telefonnummer nutzerseitig im Vorfeld eines Parkvorgangs an die Auswerteeinrichtung übermittelt werden, beispielsweise im Rahmen einer Nutzerregistrierung. Alternativ erfolgt eine Übermittlung der Telefonnummer als Teil des ersten Datensatzes.

Wie dies schon vorstehend anhand des erfindungsgemäßen Verfahrens erläutert worden ist, sind "nutzerbezogene Daten" im Sinne der Erfindung nicht auf eine Telefonnummer beschränkt. "Nutzerbezogene Daten" im Sinne der Erfindung sind vielmehr Daten, die es gestatten, eine Transaktionskennung einem Nutzer eindeutig zuzuordnen. Dies erfolgt bevorzugter Weise über eine Telefonnummer, weil die Telefonnummer als solche eindeutig ist und zudem eine direkte Kommunikation zwischen Nutzer und Hintergrundsystem ermöglicht. Insbesondere ist es gestattet, entweder auf Anfrage durch den Nutzer oder automatisch eine Transaktionskennung an ein vom Nutzer zuvor registriertes mobiles Endgerät zu übermitteln. Die Transaktionskennung steht dann für den Nutzer mithilfe des mobilen Endgeräts zur Verwendung bereit. Die erfindungsgemäße Parkeinrichtung ist in vorbeschriebener Weise aber auch ohne mobiles Endgerät verwendbar. So kann beispielsweise mittels einer App-Anwendung auch eine Kommunikation zwischen dem vom Nutzer geführten Fahrzeug und dem Hintergrundsystem stattfinden, sodass die Transaktionskennung dem Nutzer über einen Fahrzeugbildschirm zur Anzeige gebracht werden kann.

Die Auswerteeinrichtung verfügt des Weiteren über eine Transaktionseinheit. Diese dient dazu, eine Transaktionskennung zu erzeugen. Diese Transaktionskennung wird an den Nutzer der Parkeinrichtung übermittelt, und zwar vorzugsweise unter Verwendung der der Auswerteeinrichtung bekannten Telefonnummer an das vom Nutzer der Parkeinrichtung mitgeführte mobile Endgerät. Die Transaktionskennung ist systemintern mit der Nutzerkennung verknüpft, womit die Transaktionskennung einem bestimmten Nutzer eindeutig zugeordnet werden kann. Dies erlaubt es im Weiteren, einen Parkvorgang und einen Stromladevorgang einander zuzuordnen.

Die Empfangseinheit ist ferner dazu eingerichtet, einen dritten Datensatz und einen vierten Datensatz zu empfangen. Dabei umfasst der dritte Datensatz die Transaktionskennung, eine Kennung des Stromladepunktes und einen dritten Zeitstempel, und der vierte Datensatz die Kennung des Stromladepunktes und einen vierten Zeitstempel.

Der dritte und der vierte Datensatz dienen zur Identifikation eines Stromladevorgangs. Dabei werden der dritte Datensatz zu Beginn eines Stromladevorgangs und der vierte Datensatz zum Ende eines Stromladevorgangs erzeugt und an die Auswerteeinrichtung übermittelt. Anhand der Transaktionskennung kann eine unmittelbare Zuordnung des Stromladevorgangs zum Parkvorgang stattfinden. Der dritte und der vierte Zeitstempel dienen einer späteren Abrechnung des Stromladenvorgangs. Dabei ist über die Kennung des Ladepunktes selbiger eindeutig identifiziert, so dass eine Freischaltung desselben mit Beginn eines Stromladevorgangs stattfinden kann. Sobald der Stromladevorgang beendet ist, kann eine Abschaltung dieses Stromladepunkts erfolgen.

Die Auswerteeinrichtung verfügt des Weiteren über eine Auswerteeinheit. Diese wertet in einem Auswertevorgang die empfangenen Datensätze aus. Dabei wird mittels des ersten und des zweiten Datensatzes der erfolgte Parkvorgang ausgewertet. Mittels des dritten und des vierten Datensatzes findet eine Auswertung des Stromladevorgangs statt und es kann auch eine Zuordnung des Stromladevorgangs zum Parkvorgang stattfinden, und zwar mittels der Transaktionskennung.

Im Übrigen erbringt die erfindungsgemäße Parkeinrichtung die auch schon vorstehend anhand des erfindungsgemäßen Verfahrens erläuterten Vorteile.

Die Auswerteeinrichtung kann gemäß einem weiteren Merkmal der Erfindung ferner eine Prüfeinheit aufweisen. Diese ist dazu eingerichtet, die Transaktionskennung auf Gültigkeit zu überprüfen. Hierzu dienen insbesondere der erste und der dritte Zeitstempel, um eine vorgebbare Gültigkeitsdauer der Transaktionskennung nachzuprüfen. Ist die Transaktionskennung veraltet, die Gültigkeitsdauer also abgelaufen, so ist diese nicht mehr verwendbar, was durch die Prüfeinheit festgestellt werden kann.

Die Transaktionskennung kann beispielsweise in Form eines Zahlencodes vorliegen. Denkbar ist beispielsweise ein sechsstelliger Zahlencode, der dem Nutzer auf seinem mobilen Endgerät anzeigbar ist. Über eine Nutzerschnittstelle an einer einen Stromladepunkt bereitstellenden Stromabgabeeinrichtung kann dieser Zahlencode über eine Nutzerschnittstelle, beispielsweise eine Zahlentastatur eingegeben werden.

Die Transaktionskennung kann auch in Form eines QR-Codes oder eines Barcodes vorliegen, der am mobilen Endgerät des Nutzers anzeigbar ist und über die Nutzerschnittstelle an der Stromabgabeeinrichtung eingelesen werden kann.

Die Transaktionskennung ist für eine vorkonfigurierbare Zeitdauer gültig, beispielsweise für zehn Minuten, womit ein Stromladevorgang innerhalb dieser Gültigkeitsdauer nach dem ersten Zeitstempel zu beginnen hat.

Ein Prüfen der Transaktionskennung durch die Prüfeinheit auf Gültigkeit kann mindestens eine Überprüfung darauf beinhalten, ob die eingegebene Transaktionskennung zum Zeitpunkt der Eingabe für einen Einfahrvorgang in die Parkeinrichtung ausgegeben war und ob sie zum Zeitpunkt des Prüfens noch gültig ist.

Eine einmal für eine bestimmte Parkvorrichtung ausgegebene Transaktionskennung wird wiederverwendbar (d.h. sie kann vom Hintergrundsystem für dieselbe Parkeinrichtung erneut ausgegeben werden) insbesondere beim Frühesten des Eintretens eines der folgenden Ereignisse: Der zur ausgegebenen Transaktionskennung gehörige Parkvorgang ist beendet (also das zum Parkvorgang gehörige Fahrzeug ist ausgefahren), die ausgegebene Transaktionskennung ist durch Ablauf der Gültigkeitsdauer ungültig geworden oder die ausgegebene Transaktionskennung wird für einen Stromladevorgang verwendet.

Die Transaktionskennung kann sich als Funktion aus Datum, Uhrzeit, Parkeinrichtung, Einfahrt, Nutzerkennung, Zufallszahl und/oder dgl. ergeben. Entscheidend ist allein, dass die Transaktionskennung dazu dient, einen Stromladevorgang einem Parkvorgang eindeutig zuordnen zu können.

Die Transaktionskennung kann beispielsweise als SMS oder als MMS an das mobile Endgerät des Nutzers übertragen werden. Ferner ist es möglich, dass die Transaktionskennung als Datensatz an eine Park-Softwareanwendung (Park App) auf das mobile Endgerät des Nutzers gesendet wird.

Da die Transaktionskennung der eindeutigen Zuordnung und Identifizierung dient, kann sie auch als Transaktions-ID-Nummer (kurz: TIN) bezeichnet werden.

Die Offenbarung betrifft des Weiteren eine Vorrichtung für eine einen Stromladepunkt bereitstellende Stromladeeinrichtung einer Parkeinrichtung, mit einer Nutzerschnittstelle, die eingerichtet ist zum Empfangen einer Transaktionskennung vorzugsweise von einem mobilen Endgerät eines Nutzers der Parkeinrichtung, mit einer Erzeugungseinheit, die eingerichtet ist zum automatischen Erzeugen und Versenden eines Datensatzes an eine Auswerteeinrichtung der Parkeinrichtung, wobei der Datensatz die Transaktionskennung, eine Kennung des Stromladepunktes und einen Zeitstempel umfasst.

Mit der Offenbarung wird des Weiteren für sich unabhängig eine Vorrichtung vorgeschlagen, die dazu ausgebildet ist, in Kombination mit einer Stromladeeinrichtung verwendet zu werden, die zumindest einen Stromladepunkt bereitstellt. Dabei ist die Vorrichtung dazu ausgebildet, die Stromladeeinrichtung dahingehend auszurüsten, dass sie in einem erfindungsgemäßen Verfahren bestimmungsgemäß Verwendung finden kann. Die erfindungsgemäße Vorrichtung macht es insbesondere möglich, eine aus dem Stand der Technik an sich bekannte Stromladeeinrichtung dazu auszurüsten, eine Transaktionskennung vorzugsweise von einem mobilen Endgerät eines Nutzers der Parkeinrichtung empfangen zu können. Die Vorrichtung verfügt zu diesem Zweck über eine Nutzerschnittstelle, wie bereits vorstehend beschrieben. Diese Nutzerschnittstelle ist dazu ausgerüstet, eine Transaktionskennung vom Nutzer bzw. vom mobilen Endgerät des Nutzers übermittelt zu bekommen. Die Nutzerschnittstelle kann zu diesem Zweck gemäß einer ersten Alternative über ein Funkmodul verfügen. Mittels dieses Funkmoduls kann eine Funkübertragung der Transaktionskennung vom mobilen Endgerät an die Nutzerschnittstelle der Vorrichtung stattfinden. Das Funkmodul kann als Bluetooth-, Wibree-, WiMAX-, ZigBee, WLAN- oder NFC-Schnittstelle ausgeführt sein.

Gemäß einer weiteren Alternative ist die Nutzerschnittstelle mit einer Eingabeeinrichtung für eine händische bzw. manuelle Eingabe der Transaktionskennung ausgerüstet. So kann die Transaktionskennung beispielsweise durch eine Nummernfolge gebildet sein, die mittels des mobilen Endgerätes für einen Nutzer anzeigbar ist. Der Nutzer kann mit Hilfe des mobilen Endgerätes die Transaktionskennung visuell erfassen und alsdann manuell über die Eingabevorrichtung der Nutzerschnittstelle an die erfindungsgemäße Vorrichtung übermitteln.

Gemäß einer weiteren Alternative der Offenbarung ist vorgesehen, dass die Nutzerschnittstelle eine Leseeinrichtung aufweist. Bei dieser Leseeinrichtung kann es sich beispielsweise um einen Scanner handeln, der einen QR-Code oder einen Barcode einscannt, wie er vom mobilen Endgerät anzeigbar ist. Dabei stellt ein solcher Code die Transaktionskennung dar.

Die Nutzerschnittstelle kann des Weiteren mit einer Auswahleinheit ausgerüstet sein, insbesondere dann, wenn die Vorrichtung in Kombination mit einer Stromladeeinrichtung verwendet wird, die eine Vielzahl von Stromladepunkten bereitstellt. Die Auswahleinheit ist eingerichtet zur Auswahl, durch den Nutzer, genau eines Stromladepunkts für die einzuleitende Stromabgabe aus der Vielzahl von Stromladepunkten.

Die Vorrichtung verfügt des Weiteren über eine Erzeugungseinheit Diese ist dazu eingerichtet, automatisch einen Datensatz zu erzeugen und zu versenden, und zwar an die Auswerteeinrichtung der Parkeinrichtung. In schon vorbeschriebener Weise wird so von der Stromladeeinrichtung bzw. von der damit in kommunikationstechnischer Verbindung stehenden Vorrichtung ein Datensatz erzeugt und an die Auswerteeinrichtung der Parkeinrichtung übersandt. Dabei umfasst der Datensatz die Transaktionskennung, eine Kennung des Stromladepunktes und einen Zeitstempel. Dies erlaubt in schon vorbeschriebener Weise eine eineindeutige Identifizierung des Stromladepunktes und den Beginn einer Stromladung.

Die Vorrichtung ist des Weiteren mit einer Freigabeeinheit ausgerüstet Diese ist eingerichtet, eine Stromabgabe durch den Stromladepunkt nach einer vorhergehenden Autorisierung durch die Auswerteeinrichtung einzuleiten.

Es ist bevorzugt, dass ein Stromladen erst dann stattfindet, wenn durch die Auswerteeinrichtung die zuvor an sie übersandte Transaktionskennung auf Gültigkeit überprüft ist. Sofern diese Prüfung erfolgreich abgeschlossen ist, kann eine Stromabgabe beginnen. Um dies zu gewährleisten, ist die erfindungsgemäße Freigabeeinheit vorgesehen, die eine Stromabgabe erst dann einleitet, wenn dies zuvor nach abgeschlossener Prüfung durch die Auswerteeinrichtung autorisiert ist.

Die Erzeugungseinheit der Vorrichtung ist ferner dazu eingerichtet mit Beendigung einer Stromabgabe durch den Stromladepunkt einen weiteren Datensatz, d.h. einen vierten Datensatz, automatisch zu erzeugen und an die Auswerteeinrichtung zu versenden. Dieser Datensatz wird also dann an die Auswerteeinrichtung übermittelt, wenn der Stromladevorgang abgeschlossen ist. Um im Nachgang eine Inrechnungstellung für den Stromladevorgang generieren zu können, umfasst der weitere Datensatz die Kennung des Stromladepunktes und einen weiteren Zeitstempel. Optional kann für eine weitere insbesondere Plausibilitätsprüfung mit dem weiteren Datensatz auch die Transaktionskennung übermittelt werden. Im Übrigen stellen sich die schon vorstehend erläuterten Vorteile ein.

Die mit der Offenbarung vorgeschlagene Vorrichtung ermöglicht in vorteilhafter Weise auch eine Nachrüstung von schon bestehenden Stromladeeinrichtungen. Damit ist es möglich, Bestandseinrichtungen zur Durchführung des erfindungsgemäßen Verfahrens zu befähigen. Eine kostenintensive Erstausrüstung mit Stromladeeinrichtungen ist so in vorteilhafter Weise vermieden.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Parkeinrichtung;
- Fig. 2: in schematischer Darstellung einen ersten Abschnitt der erfindungsgemäßen Verfahrensdurchführung;
- Fig. 3: in schematischer Darstellung einen zweiten Abschnitt der erfindungsgemäßen Verfahrensdurchführung;
- Fig. 4: in schematischer Darstellung einen dritten Abschnitt der erfindungsgemäßen Verfahrensdurchführung;
- Fig. 5: in schematischer Darstellung einen vierten Abschnitt der erfindungsgemäßen Verfahrensdurchführung; und
- Fig. 6: in schematischer Darstellung die erfindungsgemäße Verfahrensdurchführung.

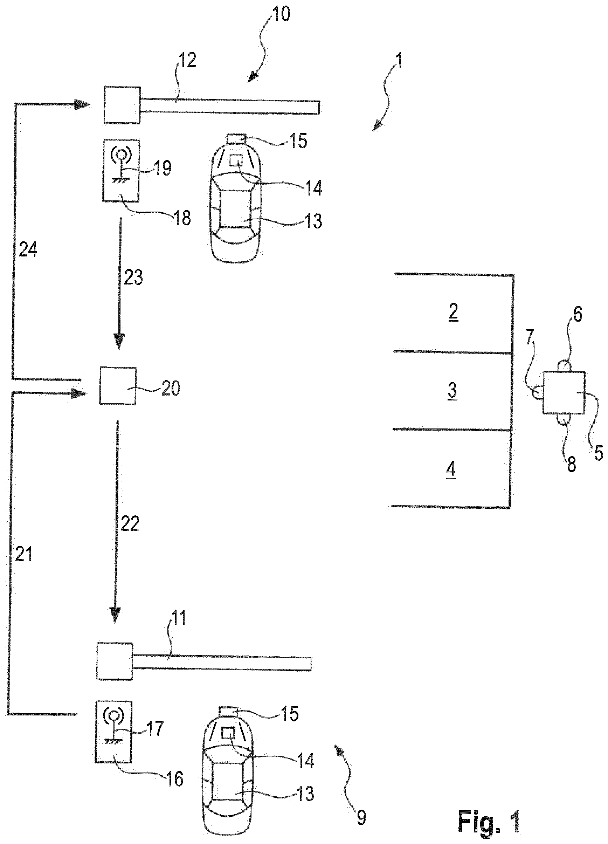

Fig. 1 lässt in rein schematischer Darstellung eine erfindungsgemäße Parkeinrichtung 1 in der Ausgestaltung eines Parkplatzes erkennen. Dieser verfügt in an sich bekannter Weise über eine Einfahrt 9 und eine Ausfahrt 10. Dabei sind sowohl die Einfahrt 9 als auch die Ausfahrt 10 beschrankt ausgebildet, wobei der Einfahrt 9 die Schranke 11 und der Ausfahrt 10 die Schranke 12 zugeordnet sind.

Die Parkeinrichtung stellt eine Mehrzahl von Parkbuchten 2, 3 und 4 bereit. Diese dienen im bestimmungsgemäßen Verwendungsfall als Stellplatz für ein Fahrzeug 13.

Den Parkbuchten 2, 3 und 4 ist eine Stromladeeinrichtung 5 in Form einer Stromladesäule zugeordnet. Diese stellt insgesamt drei Stromladepunkte zur Verfügung, nämlich die Stromladepunkte 6, 7 und 8. Im bestimmungsgemäßen Verwendungsfall dient der Stromladepunkt 6 als Ladepunkt für ein von der Parkbucht 2 aufgenommenes Fahrzeug 13. Die Stromladepunkte 7 und 8 sind indes den Parkbuchten 3 und 4 zugeordnet.

Vor Beginn eines Parkvorgangs hat sich ein Nutzer zu registrieren. Die Parkeinrichtung 1 ist zu diesem Zweck mit einem computergesteuerten Hintergrundsystem ausgerüstet. Mit der Registrierung hat der Nutzer nutzerspezifische Daten anzugeben, insbesondere Daten, die eine spätere Inrechnungstellung von Parkgebühren ermöglichen. Derlei Daten können beispielsweise eine Bankverbindung, Kreditkartendaten und dgl. umfassen. Nach erfolgreich abgeschlossener Registrierung erhält der Nutzer einen mit einer eineindeutigen Nutzerkennung ausgerüsteten RFID-Tag 14. In der Datenbank des Hintergrundsystems ist diese Nutzerkennung mit den bei der Nutzerregistrierung angegebenen Nutzerdaten verknüpft.

Beim Einfahren des Nutzers in die Parkeinrichtung 1 wird mittels einer im Bereich der Einfahrt 9 angeordneten Erfassungseinheit 16 der vom Nutzer mitgeführte RFID-Tag 14 erfasst und die davon bereitgestellte Nutzerkennung fernausgelesen. Zu diesem Zweck ist die Erfassungseinheit 16 mit einer Antenne 17 ausgerüstet. Dieser Auslesevorgang erfolgt bei Heranfahrt an die Schranke 11 automatisch und berührungslos.

Alternativ kann anstelle eines RFID-Tags 14 das Kennzeichen 15 als eineindeutige Nutzerkennung verwendet werden. In diesem Fall kommt eine Erfassungseinheit 16 zum Einsatz, die über eine optische Erfassungseinrichtung wie zum Beispiel eine Kamera verfügt.

Auf Basis der von der Erfassungseinheit 16 erfassten Nutzerkennung wird von der Erfassungseinheit 16 ein erster Datensatz 30 erzeugt. Dieser erste Datensatz 30 enthält als Daten - wie dies im Weiteren noch näher erläutert werden wird - die Nutzerkennung 31, eine Kennung 32 der Einfahrt 9 sowie einen ersten Zeitstempel 33. Dieser von der Erfassungseinheit 16 erzeugte erste Datensatz 30 wird in Entsprechung des Pfeils 21 an eine Auswerteeinrichtung 20 übermittelt.

Die Auswerteeinrichtung 20 empfängt den ersten Datensatz 30, überprüft insbesondere die Nutzerkennung 31 und gibt im Falle einer positiven Überprüfung in Entsprechung des Pfeils 22 ein Öffnungssignal an die Schranke 11. Diese öffnet daraufhin, so dass eine Einfahrt mit dem Fahrzeug 13 in die Parkeinrichtung 1 freigegeben ist.

Beim Ausfahren aus der Parkeinrichtung 1 nähert sich das Fahrzeug 13 der Schranke 12 der Ausfahrt 10. Im Bereich der Ausfahrt 10 ist eine zweite Erfassungseinheit 18 mit einer Antenne 19 angeordnet, die der automatischen Erfassung der vom RFID-Tag 14 bereitgestellten Nutzerkennung dient.

Auf Basis der Nutzerkennung erzeugt die Erfassungseinheit 18 einen zweiten Datensatz 34, der - wie dies ebenfalls im Weiteren noch näher erläutert werden wird - die Nutzerkennung 31, eine Kennung 35 der Ausfahrt 10 sowie einen zweiten Zeitstempel 33 umfasst.

Der von der Erfassungseinheit 18 erzeugte zweite Datensatz 34 wird in Entsprechung des Pfeils 23 an die Auswerteeinrichtung 20 übersandt, die den zweiten Datensatz 34 empfängt. Anhand der eineindeutigen Nutzerkennung 31 kann die Auswerteeinrichtung 20 den zuvor empfangenen ersten Datensatz 30 mit dem zweiten Datensatz 34 verknüpfen, womit das Einfahren in die Parkeinrichtung 1 sowie das Ausfahren aus der Parkeinrichtung 1 und damit auch die Parkdauer anhand der beiden Zeitstempel 33 und 36 festgestellt werden können.

Nach einem Empfang des zweiten Datensatzes 34 durch die Auswerteeinrichtung 20 gibt diese in Entsprechung des Pfeils 24 ein Öffnungssignal an die Schranke 12, die daraufhin öffnet, so dass der Nutzer die Parkeinrichtung 1 mit seinem Fahrzeug 13 verlassen kann.

Die Auswerteeinrichtung 20 verfügt unter anderem über eine Abrechnungseinheit 29, mittels der der erfolgte Parkvorgang abgerechnet und dem Nutzer anhand seiner Nutzerkennung zugeordnet und in Rechnung gestellt werden kann.

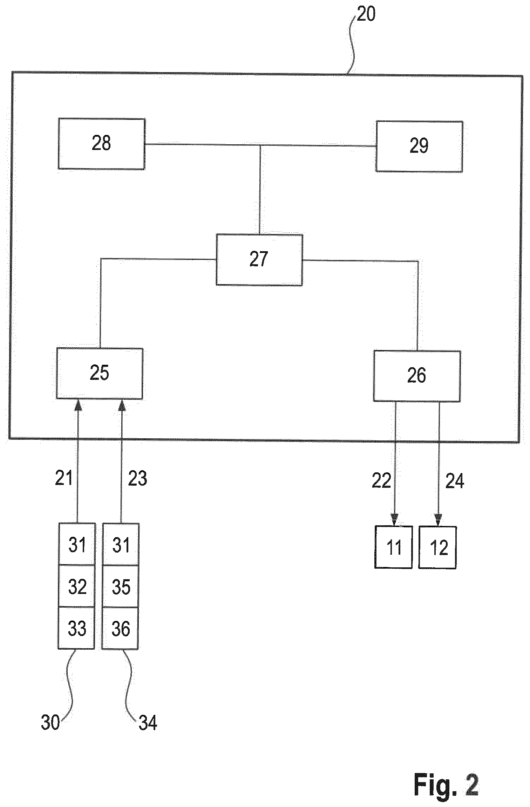

Fig. 2 lässt den vorerläuterten Verfahrensabschnitt anhand einer schematischen Darstellung erkennen. Wie sich aus der Darstellung nach Fig. 2 ergibt, verfügt die Auswerteeinrichtung 20 über eine Empfangseinheit 25. Diese empfängt in Entsprechung des Pfeils 21 zu Beginn eines Parkvorgangs, d.h. mit dem Einfahren des Fahrzeuges 13 in die Parkeinrichtung 1 einen ersten Datensatz 30. Dieser umfasst die Nutzerkennung 31, die Einfahrtkennung 32 sowie einen ersten Zeitstempel 33.

Die Empfangseinheit 25 ist ferner dazu eingerichtet, einen zweiten Datensatz 34 zu empfangen, der mit Beendigung des Parkvorgangs an die Auswerteeinrichtung 20 übermittelt wird. Der zweite Datensatz 34 umfasst die Nutzerkennung 31, die Ausfahrtkennung 35 und einen zweiten Zeitstempel 36.

Die Auswerteeinrichtung 20 verfügt des Weiteren über eine Auswerteeinheit 27. Diese steht in kommunikationstechnischer Verbindung sowohl mit der Empfangseinheit 25 als auch mit einer Datenbank 28 sowie mit der Abrechnungseinheit 29 und einer Sendeeinheit 26.

Die von der Empfangseinheit 25 empfangenen Datensätze 30 und 34 werden mittels der Auswerteeinheit 27 ausgewertet. Es findet hierbei insbesondere anhand der beiden Zeitstempel 33 und 36 eine Ermittlung der Parkdauer statt. Die ermittelte Parkdauer kann dem Nutzer anhand seiner Nutzerkennung 31 zugeordnet werden. Der Datenbank 28 können nutzerspezifische Daten beispielsweise zum Zwecke der Abrechnung entnommen werden, wobei die Abrechnung mittels der Abrechnungseinheit 29 stattfindet.

Die Sendeinheit 26 dient dazu, in schon vorbeschriebener Weise in Entsprechung der Pfeile 22 und 24 ein Öffnungssignal an die Schranken 11 und 12 zu geben.

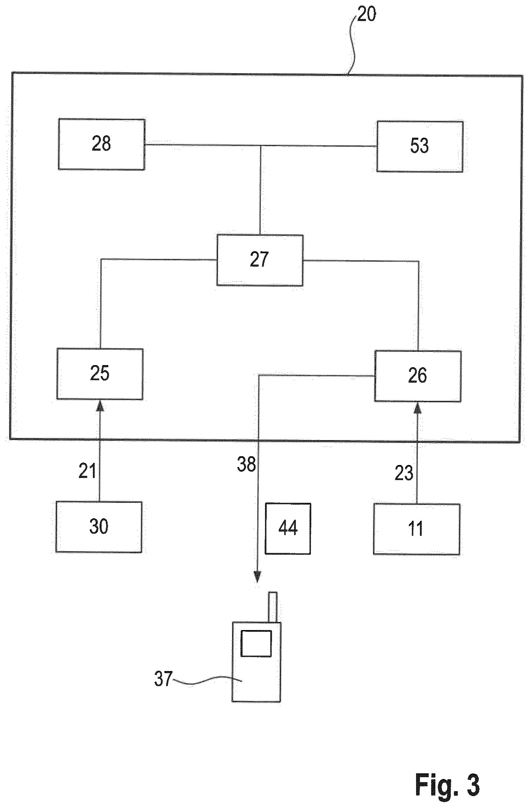

Fig. 3 lässt in schematischer Darstellung einen zweiten Abschnitt des erfindungsgemäßen Verfahrens erkennen.

Neben den schon vorerläuterten Einheiten verfügt die Erfassungseinrichtung 20 des Weiteren über eine Transaktionseinheit 53. Diese erzeugt nach Empfangen eines ersten Datensatzes 30 durch die Empfangseinheit 25 eine Transaktionskennung 44. Diese Transaktionskennung 44, auch Transaktions-ID-Nummer genannt, wird von der Sendeeinheit 26 in Entsprechung des Pfeils 38 an ein vom Nutzer mitgeführtes mobiles Endgerät 37, beispielsweise ein Handy übermittelt. Die Transaktionskennung 44 kann in Form eines Zahlencodes, eines QR-Codes oder eines Barcodes vorliegen. Die Übermittlung kann per SMS oder MMS erfolgen.

Vor dem Einfahren in die Parkeinrichtung 1 ist die Telefonnummer des vom Nutzer mitgeführten mobilen Endgerätes 37 an die Auswerteeinrichtung 20 zu übermitteln. Dies kann beispielsweise bei der Nutzerregistrierung stattfinden. Die Telefonnummer wird in der Datenbank 28 gespeichert und ist dem Nutzer über die Nutzerkennung 31 eineindeutig zuordenbar. Alternativ kann die Telefonnummer des vom Nutzer mitgeführten mobilen Endgerätes 37 auch als Bestandteil des ersten Datensatzes 30 an die Auswerteeinrichtung 20 übertragen werden.

Gemäß dem hier erläuterten Beispiel dient die Telefonnummer des vom Nutzer mitgeführten mobilen Endgeräte 37 als nutzerbezogene Daten, die es ermöglichen, eine im Weiteren erzeugte Transaktionskennung einem Nutzer zuzuordnen und diesem zuzustellen. Die Erfindung ist aber auf die Nutzung einer Telefonnummer nicht beschränkt, da natürlich auch andere Wege der Übermittlung einer Transaktionskennung an den Nutzer möglich sind. Entscheidend im erfindungsgemäßen Sinne ist, dass die Übermittlung der Transaktionskennung elektronisch, d.h. ohne separates Parkmedium, erfolgt. Damit können sowohl ein Parkvorgang als auch ein Stromladevorgang gemeinschaftlich einem Nutzer in Rechnung gestellt werden.

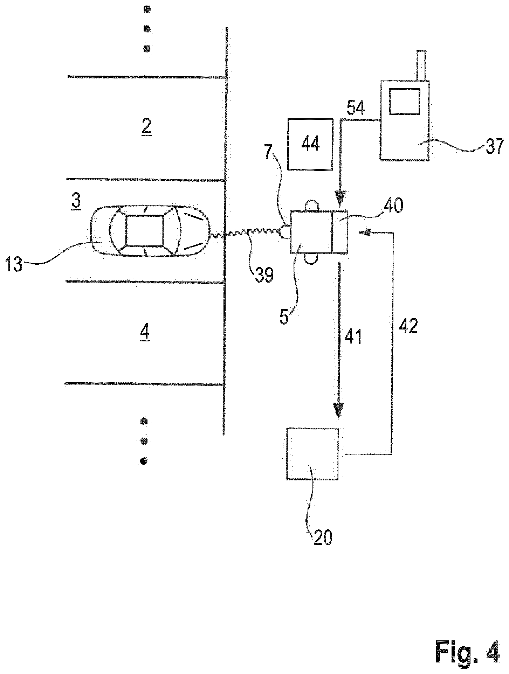

Die Transaktionskennung 44 dient dazu, einen Stromladevorgang an der Stromladeeinrichtung 5 zu initialisieren, wie dies anhand von Fig. 4 dargestellt ist.

Fig. 4 lässt erkennen, dass das Fahrzeug 13 in der Parkbucht 3 abgestellt ist. Es ist zum Stromladen zwecks Aufladung der vom Fahrzeug 13 mitgeführten Akkumulatoren an den Stromladepunkt 7 der Stromladeeinrichtung 5 angeschlossen, und zwar mittels eines stromführenden Kabels 39. Der Stromladevorgang wird dadurch initialisiert, dass die zuvor an das mobile Endgerät 37 übermittelte Transaktionskennung 44 in Entsprechung des Pfeils 54 an eine Nutzerschnittstelle 40 der den Stromladepunkt 7 bereitstellenden Stromladeeinrichtung 5 übermittelt wird. Eine solche Übermittlung kann automatisch mittels Funk oder händisch mittels einer entsprechenden Eingabe durch den Nutzer erfolgen. Es kann auch vorgesehen sein, dass die Nutzerschnittstelle 40 eine Leseeinrichtung beispielsweise in Form eines Scanners aufweist, die ein automatisiertes Auslesen der Transaktionskennung 44 von einem Display des Endgerätes 37 ermöglicht. Entscheidend für die erfindungsgemäße Verfahrensdurchführung ist indes allein, dass eine mit der Nutzerkennung verknüpfte Transaktionskennung 44 zum Initialisieren eines Stromladens an die Stromladeeinrichtung übermittelt wird.

Im weiteren Gang des erfindungsgemäßen Verfahrens wird von der Stromladeeinrichtung 5 ein dritter Datensatz 43 erzeugt, der in Entsprechung des Pfeils 41 an die Auswerteeinrichtung 20 übertragen wird. Der dritte Datensatz 43 umfasst die Transaktionskennung 44, eine Kennung 45 des Stromladepunktes 7 und einen dritten Zeitstempel 46. Die Kennung 45 des Stromladepunktes 7 wird vorzugsweise einrichtungsseitig automatisch generiert, sei es dadurch, dass der Nutzer einen Stromladepunkt auswählt oder einrichtungsseitig ermittelt wird, an welchen der Stromladepunkte das stromführende Kabel 39 angeschlossen ist. An die Auswerteeinrichtung 20 wird mithin im Ergebnis ein Datensatz 43 übermittelt, der die Transaktionskennung 44 einem konkreten Ladepunkt 7 zuordnet, und dies kombiniert mit einem Zeitstempel.

Die Transaktionskennung 44 ist vorzugsweise nur für eine befristete Zeitdauer gültig. So kann beispielsweise eine Gültigkeit von zehn Minuten vorgesehen sein, gerechnet ab dem Einfahren in die Parkeinrichtung 1, d.h. zehn Minuten ab erstem Zeitstempel 33. Nach Ablauf dieser vorgebbaren Gültigkeitsdauer wird die Transaktionskennung 44 ungültig, so dass diese nicht mehr dazu geeignet ist, einen Stromladevorgang beginnen zu können.

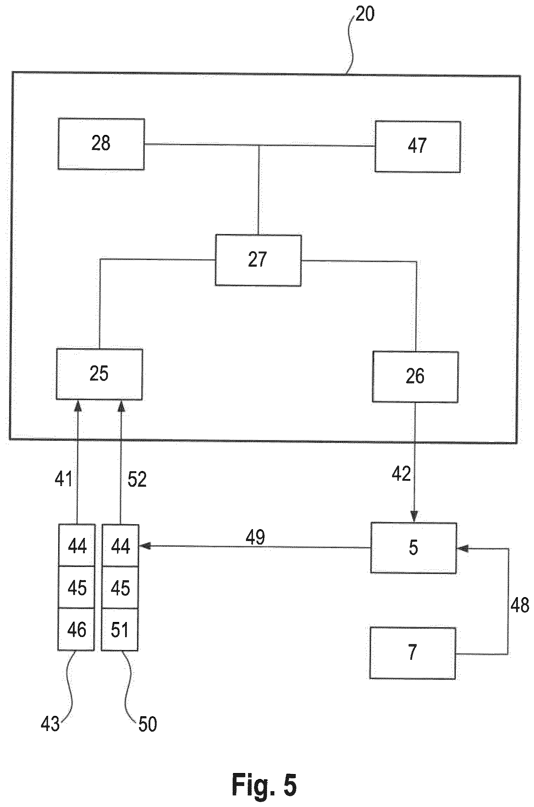

Die Auswerteeinrichtung 20 verfügt vorzugsweise über eine Prüfeinheit 47 (Fig. 5), mittels welcher eine Überprüfung der Transaktionskennung 44 auf Gültigkeit gestattet ist. In Entsprechung des Pfeils 42 erfolgt eine Rückmeldung der Auswerteeinrichtung 20 an die Stromladeinrichtung 5, und zwar in Abhängigkeit vom Ergebnis der Überprüfung durch die Prüfeinheit 47.

Sofern die Prüfung durch die Prüfeinheit 47 positiv verlaufen ist, erfolgt eine Freischaltung des Stromladepunkts 7 und der Stromladevorgang beginnt. Andernfalls wird der Stromladepunkt 7 nicht freigegeben, was dem Nutzer vorzugsweise angezeigt wird.

Sobald der Stromladevorgang beendet ist, wird von der Stromladeinrichtung 5 ein vierter Datensatz 50 erzeugt, der in Entsprechung des Pfeils 52 gemäß Fig. 5 von der Empfangseinheit 25 der Auswerteeinrichtung 20 empfangen wird, ebenso wie der schon zuvor von der Stromeinrichtung 5 an die Auswerteeinrichtung 20 versendete dritte Datensatz 43.

Die Beendigung eines Stromladevorgangs kann entweder dadurch eingeleitet werden, dass der Nutzer eine entsprechende Eingabe über die Nutzerschnittstelle 40 der Stromladeeinrichtung 5 tätig. Alternativ wird der Stromladevorgang als für beendet definiert, wenn das stromführende Kabel 39 nutzerseitig vom Fahrzeug 13 getrennt wird und kein Strom mehr über den Ladepunkt 7 fließt. Eine zusätzliche Eingabe des Nutzers ist in diesem Fall nicht erforderlich, da eine automatische Erkennung der Beendigung des Stromladevorgangs infolge der Trennung des Fahrzeugs vom Kabel 39 erkannt wird.

Der vierte Datensatz umfasst zumindest die Ladepunktkennung 45 und einen vierten Zeitstempel 51. Optional kann der vierte Datensatz 50, wie in Fig. 5 dargestellt, auch noch die Transaktionskennung 44 umfassen.

Sobald auch der vierte Datensatz 50 von der Empfangseinheit 25 empfangen worden ist, kann mittels der Auswerteeinheit 27 eine Auswertung von drittem Datensatz 43 und viertem Datensatz 50 stattfinden. Dabei kann der erfolgte Stromladevorgang mittels der Transaktionskennung 44 einer Nutzerkennung 31 und damit einem bestimmten Nutzer eindeutig zugeordnet werden. Zudem kann anhand der Zeitstempel 46 und 51 die Dauer des Stromladevorgangs ermittelt und hierauf basierend die für das Stromladen zu zahlende Gebühr berechnet werden. Hierzu dient die schon vorstehend erläuterte und in Fig. 5 nicht separat dargestellte Abrechnungseinheit 29. Wie auch für die Berechnung etwaiger Parkgebühren stehen über die Datenbank 28 nutzerspezifische Daten zur Verfügung, die eine entsprechende Inrechnungstellung gegenüber dem Nutzer erlauben.

Fig. 5 lässt schematisch unter anderem die Prüfeinheit 47 erkennen. Diese prüft nach einer Übermittlung des ersten Datensatzes 43 die damit übersandte Transaktionskennung 44 auf Gültigkeit. Sofern die Transaktionskennung 44 gültig ist, geht in Entsprechung des Pfeils 42 ein Freigabesignal an die Stromladeeinrichtung 5, woraufhin der Stromladepunkt 7 freigegeben wird, so dass der angeforderte Stromladevorgang beginnen kann. Der Stromladepunkt 7 gibt seinerseits in Entsprechung des Pfeils 48 mit Beendigung eines Stromladevorgangs ein entsprechendes Signal ab. Daraufhin erzeugt die Stromladeeinrichtung 5 den vierten Datensatz 50, und zwar in Entsprechung des Pfeils 49, der dann in schon vorerläuterter Weise von der Stromladeeinrichtung 5 an die Auswerteeinrichtung 20 übermittelt wird.

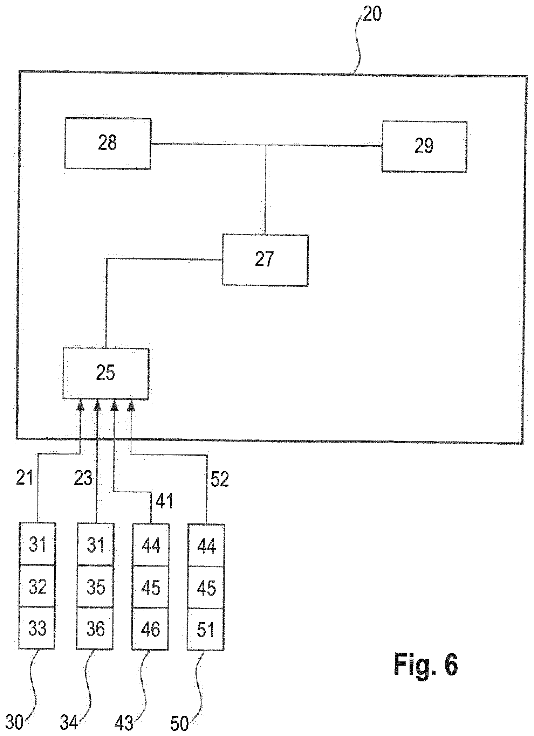

Fig. 6 lässt in schematischer Darstellung zusammenfassend erkennen, dass die Empfangseinheit 25 der Auswerteeinrichtung 20 dazu ausgerüstet ist, während eines Park- und Stromladevorgangs die Datensätze 30, 34, 43 und 50 zu empfangen. Dabei umfassen die Datensätze 30 und 34 jeweils eine Nutzerkennung 31 und die Datensätze 43 und 50 jeweils eine Transaktionskennung 44.

In der Auswerteeinheit 27 der Auswerteeinrichtung 20 findet eine Auswertung der Datensätze 30, 34, 43 und 50 statt. Dabei dienen die Datensätze 30 und 34 dazu, einen erfolgten Parkvorgang auszuwerten, wohingegen die Datensätze 43 und 50 zur Auswertung eines erfolgten Stromladevorgangs dienen. Über die Transaktionskennung 44 kann dabei der Stromladevorgang dem Parkvorgang zugeordnet werden. Dies ermöglicht eine gemeinsame Abrechnung von Parkgebühren und Stromgebühren über die Abrechnungseinheit 29. Dabei erfolgt eine Inrechnungstellung in Entsprechung der in der Datenbank 28 hinterlegten Nutzerdaten.

### Bezugszeichen

- 1: Parkeinrichtung
- 2: Parkbucht
- 3: Parkbucht
- 4: Parkbucht
- 5: Stromladeeinrichtung
- 6: Stromladepunkt
- 7: Stromladepunkt
- 8: Stromladepunkt
- 9: Einfahrt
- 10: Ausfahrt
- 11: Schranke
- 12: Schranke
- 13: Fahrzeug
- 14: RFID-Tag
- 15: Kennzeichen
- 16: Erfassungseinheit
- 17: Antenne
- 18: Erfassungseinheit
- 19: Antenne
- 20: Auswerteeinrichtung
- 21: Pfeil
- 22: Pfeil
- 23: Pfeil
- 24: Pfeil
- 25: Empfangseinheit
- 26: Sendeeinheit
- 27: Auswerteeinheit
- 28: Datenbank
- 29: Abrechnungseinheit
- 30: erster Datensatz
- 31: Nutzerkennung
- 32: Einfahrtkennung
- 33: erster Zeitstempel
- 34: zweiter Datensatz
- 35: Ausfahrtkennung
- 36: zweiter Zeitstempel
- 37: mobiles Endgerät
- 38: Pfeil
- 39: Kabel
- 40: Nutzerschnittstelle
- 41: Pfeil
- 42: Pfeil
- 43: dritter Datensatz
- 44: Transaktionskennung
- 45: Ladepunktkennung
- 46: dritter Zeitstempel
- 47: Prüfeinheit
- 48: Pfeil
- 49: Pfeil
- 50: vierter Datensatz
- 51: vierter Zeitstempel
- 52: Pfeil
- 53: Transaktionseinheit
- 54: Pfeil

## Patentansprüche

1. Verfahren zum Betrieb einer gebührenpflichtigen Parkeinrichtung (1), insbesondere einer Parkeinrichtung (1) für wenigstens teilelektrisch betriebene Fahrzeuge (13), die eine Mehrzahl von Stromladepunkten (5, 6, 7) aufweist, mit folgenden Schritten:
- bei Einfahren eines Fahrzeugs (13) in die Parkeinrichtung (1) Empfangen eines ersten Datensatzes (30) durch eine Auswerteeinrichtung (20), wobei der erste Datensatz (30) eine einen Nutzer der Parkeinrichtung (1) identifizierende Kennung (31), eine Kennung (32) der Einfahrt (9) der Parkeinrichtung (1) und einen ersten Zeitstempel (33) umfasst,
- bei Ausfahren des Fahrzeugs (13) aus der Parkeinrichtung (1) Empfangen eines zweiten Datensatzes (34) durch die Auswerteeinrichtung (20), wobei der zweite Datensatz (34) die den Nutzer der Parkeinrichtung (1) identifizierende Kennung (31), eine Kennung (35) der Ausfahrt (10) der Parkeinrichtung (1) und einen zweiten Zeitstempel (36) umfasst,
- Übermitteln nutzerbezogener Daten an die Auswerteeinrichtung (20) durch den Nutzer,
- Erzeugen einer Transaktionskennung (44) durch die Auswerteeinrichtung (20) und Versenden der Transaktionskennung (44) an den Nutzer, wobei die Transaktionskennung nach einem Empfangen des ersten Datensatzes durch die Auswerteeinrichtung entweder automatisch oder auf vorherige Anfrage durch den Nutzer erzeugt wird und die erzeugte Transaktionskennung dem Nutzer mittels der nutzerbezogenen Daten zugeordnet wird
- Initialisieren eines Stromladens an einem Stromladepunkt (6, 7, 8) durch Übermitteln der Transaktionskennung (44) an eine Nutzerschnittstelle (40) einer den Stromladepunkt (6, 7, 8) bereitstellenden Stromladeeinrichtung (5),
- Empfangen eines dritten Datensatzes (43) von der den Stromladepunkt (6, 7, 8) bereitstellenden Stromladeeinrichtung (5) durch die Auswerteeinrichtung (20), wobei der dritte Datensatz (43) die Transaktionskennung (44), eine Kennung (45) des Stromladepunkts (6, 7, 8) und einen dritten Zeitstempel (46) umfasst,
- Empfangen eines vierten Datensatzes (50) von der den Stromladepunkt (6, 7, 8) bereitstellenden Stromladeeinrichtung (5) durch die Auswerteeinrichtung (20), wobei der vierte Datensatz (50) die Kennung (45) des Stromladepunkts (6, 7, 8) und einen vierten Zeitstempel (51) umfasst und
- in einem Auswertevorgang Auswerten der empfangenen Datensätze (30, 34, 43, 50) durch die Auswerteeinrichtung (20), wobei mittels des ersten und des zweiten Datensatzes (30, 34) ein Parkvorgang und mittels des dritten und des vierten Datensatzes (43, 50) ein Stromladevorgang ermittelt werden und wobei der Stromladevorgang dem Parkvorgang anhand der Transaktionskennung (44) zugeordnet wird.

2. Verfahren nach Anspruch 1, **dadurch gekennzeichnet, dass** die nutzerbezogenen Daten eine ein vom Nutzer der Parkeinrichtung (1) mitgeführtes mobiles Endgerät (37) identifizierende Kennung aufweisen.

3. Verfahren nach Anspruch 2, **dadurch gekennzeichnet, dass** die identifizierende Kennung des mobilen Endgeräts (37) die Telefonnummer des mobilen Endgeräts (37) ist.

4. Verfahren nach Anspruch 3, **dadurch gekennzeichnet, dass** die nutzerbezogenen Daten, insbesondere die Telefonnummer, vor dem Einfahren in die Parkeinrichtung (1) durch eine vorherige Nutzerregistrierung an die Auswerteeinrichtung (20) übermittelt werden.

5. Verfahren nach Anspruch 3, **dadurch gekennzeichnet, dass** die nutzerbezogenen Daten, insbesondere die Telefonnummer, bei dem Einfahren in die Parkeinrichtung (1) als Bestandteil des ersten Datensatzes (30) an die Auswerteeinrichtung (20) übermittelt werden.

6. Verfahren nach einem der vorhergehenden Ansprüche, **dadurch gekennzeichnet, dass** die Transaktionskennung (44) nach einem Empfangen des ersten Datensatzes (30) durch die Auswerteeinrichtung (20) automatisch erzeugt und an den Nutzer, vorzugsweise an das vom Nutzer mitgeführte mobile Endgerät (37), übersendet wird.

7. Verfahren nach einem der vorherigen Ansprüche 1 bis 5, **dadurch gekennzeichnet, dass** die Transaktionskennung (44) nach einem Empfangen des ersten Datensatzes (30) auf vorherige Anfrage des Nutzers erzeugt und an den Nutzer vorzugsweise an das vom Nutzer mitgeführte mobile Endgerät (37) übersendet wird.

8. Verfahren nach einem der vorhergehenden Ansprüche, **dadurch gekennzeichnet, dass** die Transaktionskennung (44) vom mobilen Endgerät (37) des Nutzers bereitgestellt und an die Nutzerschnittstelle (40) der Stromladeeinrichtung (5) übermittelt wird.

9. Verfahren nach einem der vorhergehenden Ansprüche, **dadurch gekennzeichnet, dass** die Transaktionskennung (44) in Form eines Zahlencodes manuell an die Nutzerschnittstelle (40) der Stromladeeinrichtung (5) eingegeben wird oder in Form eines QR-Codes oder eines Barcodes von der die Nutzerschnittstelle (40) der Stromladeeinrichtung (5) optisch eingelesen wird oder von der die Nutzerschnittstelle (40) der Stromladeeinrichtung (5) mittels einer kontaktlosen Funkdatenschnittstelle eingelesen wird.

10. Verfahren nach einem der vorhergehenden Ansprüche, **dadurch gekennzeichnet, dass** die Transaktionskennung (44) vor Beginn eines Stromladevorgangs durch die Auswerteeinrichtung (20) auf Gültigkeit überprüft wird.

11. Verfahren nach einem der vorhergehenden Ansprüche, **dadurch gekennzeichnet, dass** zu der Transaktionskennung (44) bei Erzeugung eine frei vorgebbare Gültigkeitsdauer generiert wird.

12. Verfahren nach einem der vorhergehenden Ansprüche, **dadurch gekennzeichnet, dass** eine Prüfung der Transaktionskennung (44) auf Gültigkeit eine Prüfung auf eine eindeutige Zuordnung der Transaktionskennung (44) zu einem Einfahrvorgang und eine Prüfung auf Bestehen der Gültigkeitsdauer umfasst.

13. Verfahren nach einem der vorhergehenden Ansprüche, **dadurch gekennzeichnet, dass** eine gemeinschaftliche Abrechnung von Gebühren für einen Parkvorgang einerseits und einen Stromladevorgang andererseits durchgeführt wird.

14. Parkeinrichtung, insbesondere gebührenpflichtige Parkeinrichtung (1) für wenigstens teilelektrisch betriebene Fahrzeuge (13), mit einer Mehrzahl von Stromladepunkten (6, 7, 8), vorzugsweise zur Durchführung eines Verfahrens nach einem der vorhergehenden Ansprüche 1 bis 11, umfassend:
- eine Auswerteeinrichtung (20), die eine Empfangseinheit (25), eine Transaktionseinheit (53) und eine Auswerteeinheit (27) aufweist,
- wobei die Empfangseinheit (25) eingerichtet ist zum Empfangen eines
ersten Datensatzes (30), umfassend eine einen Nutzer der Parkeinrichtung (1) identifizierende Kennung (31), eine Kennung (32) der Einfahrt (9) der Parkeinrichtung (1) und einen ersten Zeitstempel (33),
eines zweiten Datensatzes (34), umfassend die den Nutzer der Parkeinrichtung (1) identifizierende Kennung (31), eine Kennung (32) der Ausfahrt (10) der Parkeinrichtung (1) und einen zweiten Zeitstempel (36), und
nutzerbezogene Daten eines Nutzers der Parkeinrichtung (1), insbesondere einer Telefonnummer eines von dem Nutzer der Parkeinrichtung (1) mitgeführten mobilen Endgeräts (37),
- wobei die Transaktionseinheit (53) eingerichtet ist zum Erzeugen und Versenden einer Transaktionskennung (44) an den Nutzer der Parkeinrichtung (1), insbesondere an das vom Nutzer der Parkeinrichtung (1) mitgeführte mobile Endgerät (37), wobei die Transaktionskennung nach einem Empfangen des ersten Datensatzes durch die Auswerteeinrichtung entweder automatisch oder auf vorherige Anfrage durch den Nutzer erzeugt wird und die erzeugte Transaktionskennung dem Nutzer mittels der nutzerbezogenen Daten zugeordnet wird
- wobei die Empfangseinheit (25) ferner eingerichtet ist zum Empfangen eines dritten Datensatzes (43), umfassend die Transaktionskennung (44), eine Kennung (45) des Stromladepunkts (6, 7, 8) und einen dritten Zeitstempel (46), und
eines vierten Datensatzes (50), umfassend die Kennung (45) des Stromladepunkts (6, 7, 8) und einen vierten Zeitstempel (51),
- und wobei die Auswerteeinheit (27) eingerichtet ist zum Auswerten der empfangenen Datensätze (30, 34, 43, 50) in einem Auswertevorgang, wobei mittels des ersten und des zweiten Datensatzes (30, 34) ein Parkvorgang und mittels des dritten und des vierten Datensatzes (43, 50) ein Stromladevorgang ermittelt werden und wobei der Stromladevorgang dem Parkvorgang anhand der Transaktionskennung (44) zugeordnet wird.

15. Parkeinrichtung nach Anspruch 14, **dadurch gekennzeichnet, dass** die Auswerteeinrichtung (20) ferner eine Prüfeinheit (47) aufweist, die eingerichtet ist zum Überprüfen der Transaktionskennung (44) auf Gültigkeit.

16. Parkeinrichtung nach Anspruch 14 oder 15, **dadurch gekennzeichnet, dass** die Einheiten (25, 26, 27, 28, 29, 47, 53) der Auswerteeinrichtung (20) zumindest teilweise örtlich parkeinrichtungsentfemt ausgebildet sind.

17. Auswerteeinrichtung (20) für eine gebührenpflichtige Parkeinrichtung (1) nach Anspruch 14, aufweisend eine Empfangseinheit (25), eine Transaktionseinheit (53) und eine Auswerteeinheit (27),
- wobei die Empfangseinheit (25) eingerichtet ist zum Empfangen
eines ersten Datensatzes (30), umfassend eine einen Nutzer der Parkeinrichtung (1) identifizierende Kennung (31), eine Kennung (32) der Einfahrt (9) der Parkeinrichtung (1) und einen ersten Zeitstempel (33),
eines zweiten Datensatzes (34), umfassend die den Nutzer der Parkeinrichtung (1) identifizierende Kennung (31), eine Kennung (32) der Ausfahrt (10) der Parkeinrichtung (1) und einen zweiten Zeitstempel (36), und
einer Telefonnummer eines von einem Nutzer der Parkeinrichtung (1) mitgeführten mobilen Endgeräts (37),
- wobei die Transaktionseinheit (53) eingerichtet ist zum Erzeugen und Versenden einer Transaktionskennung (44) an den Nutzer der Parkeinrichtung (1), insbesondere an das vom Nutzer der Parkeinrichtung (1) mitgeführte mobile Endgerät (37), wobei die Transaktionskennung nach einem Empfangen des ersten Datensatzes durch die Auswerteeinrichtung entweder automatisch oder auf vorherige Anfrage durch den Nutzer erzeugt wird und die erzeugte Transaktionskennung dem Nutzer mittels der nutzerbezogenen Daten zugeordnet wird
- wobei die Empfangseinheit (25) ferner eingerichtet ist zum Empfangen
eines dritten Datensatzes (43), umfassend die Transaktionskennung (44), eine Kennung (45) des Stromladepunkts (6, 7, 8) und einen dritten Zeitstempel (46), und
eines vierten Datensatzes (50), umfassend die Kennung (45) des Stromladepunkts (6, 7, 8) und einen vierten Zeitstempel (51),
- und wobei die Auswerteeinheit (27) eingerichtet ist zum Auswerten der empfangenen Datensätze (30, 34, 43, 50) in einem Auswertevorgang, wobei mittels des ersten und des zweiten Datensatzes (30, 34) ein Parkvorgang und mittels des dritten und des vierten Datensatzes (43, 50) ein Stromladevorgang ermittelt werden und wobei der Stromladevorgang dem Parkvorgang anhand der Transaktionskennung (44) zugeordnet wird.

18. Parkeinrichtung nach einem der Ansprüche 14-16 mit einer Vorrichtung für eine einen Stromladepunkt (6, 7, 8) bereitstellende Stromladeeinrichtung (5) der Parkeinrichtung (1), mit einer Nutzerschnittstelle (40), die eingerichtet ist zum Empfangen der Transaktionskennung (44) von einem Nutzer der Parkeinrichtung (1), insbesondere von einem mobilen Endgerät (37) eines Nutzers der Parkeinrichtung (1), mit einer Erzeugungseinheit, die eingerichtet ist zum automatischen Erzeugen und Versenden eines Datensatzes (43) an eine Auswerteeinrichtung (20) der Parkeinrichtung (1), wobei der Datensatz (43) die Transaktionskennung (44), eine Kennung (45) des Stromladepunktes (6, 7, 8) und einen Zeitstempel (46) umfasst.

19. Parkeinrichtung nach Anspruch 18, **dadurch gekennzeichnet, dass** die Nutzerschnittstelle (40) ein Funkmodul aufweist.

20. Parkeinrichtung nach Anspruch 18, **dadurch gekennzeichnet, dass** die Nutzerschnittstelle (40) eine Leseeinrichtung aufweist.

21. Parkeinrichtung nach einem der vorhergehenden Ansprüche 18 bis 20, **gekennzeichnet durch** eine Anzeigenvorrichtung der Vorrichtung für eine einen Stromladepunkt bereitstellende Stromladeeinrichtung.

22. Parkeinrichtung nach einem der vorhergehenden Ansprüche 18 bis 21, **gekennzeichnet durch** eine Freigabeeinheit der Vorrichtung für eine einen Stromladepunkt bereitstellende Stromladeeinrichtung, wobei die Freigabeeinrichtung eingerichtet ist, eine Stromabgabe durch den Stromladepunkt (6, 7, 8) nach einer vorhergehenden Autorisierung durch die Auswerteeinrichtung (20) einzuleiten.

23. Parkeinrichtung nach einem der vorhergehenden Ansprüche 18 bis 22, **dadurch gekennzeichnet, dass** die Erzeugungseinheit eingerichtet ist, mit Beendigung einer Stromabgabe durch den Stromladepunkt (6, 7, 8) einen weiteren Datensatz (50) automatisch zu erzeugen und an die Auswerteeinrichtung (20) zu versenden, wobei der weitere Datensatz (50) die Kennung (45) des Stromladepunktes (6, 7, 8) und einen weiteren Zeitstempel (51) umfasst.

## Claims

1. Method for operating a parking facility (1) for which a charge is due, in particular a parking facility (1) for at least partially electrically operated vehicles (13) which has a plurality of current charging points (5, 6, 7), the method comprising the following steps:
- on entry of a vehicle (13) into the parking facility (1), receiving a first data set (30) by an evaluation device (20), the first data set (30) comprising an identifier (31) identifying a user of the parking facility (1), an identifier (32) of the entry (9) of the parking facility (1) and a first time stamp (33),
- on exit of the vehicle (13) from the parking facility (1), receiving a second data set (34) by the evaluation device (20), the second data set (34) comprising the identifier (31) identifying the user of the parking facility (1), an identifier (35) of the exit (10) of the parking facility (1) and a second time stamp (36),
- transmission of user-related data to the evaluation device (20) by the user,
- generating a transaction identifier (44) by the evaluation device (20) and sending the transaction identifier (44) to the user, wherein the transaction identifier is generated either automatically or upon prior request by the user after receipt of the first data set by the evaluation device and the generated transaction identifier is assigned to the user by means of the user-related data,
- initializing a charging process at a charging point (6, 7, 8) by transmitting the transaction identifier (44) to a user interface (40) of a charging device (5) providing the charging point (6, 7, 8),
- receiving a third data set (43) from the current charging device (5) providing the current charging point (6, 7, 8) by the evaluation device (20), the third data set (43) comprising the transaction identifier (44), an identifier (45) of the current charging point (6, 7, 8) and a third time stamp (46),
- receiving a fourth data set (50) from the current charging device (5) providing the current charging point (6, 7, 8) by the evaluation device (20), the fourth data set (50) comprising the identifier of the current charging point (6, 7, 8) and a fourth time stamp (51), and
- in an evaluation process, evaluation of the received data sets (30, 34, 43, 50) by the evaluation device (20), wherein a parking process is determined by means of the first and the second data set (30, 34) and a current charging process is determined by means of the third and the fourth data set (43, 50), and wherein the current charging process is assigned to the parking process by means of the transaction identifier (44).

2. Method according to claim 1, **characterized in that** the user-related data comprise an identifier identifying a mobile terminal (37) carried by the user of the parking facility (1).

3. Method according to claim 2, **characterized in that** the identifier of the mobile terminal (37) is the telephone number of the mobile terminal (37).

4. Method according to claim 3, **characterized in that** the user-related data, in particular the telephone number, are transmitted to the evaluation device (20) by prior user registration before entering the parking facility (1).

5. Method according to claim 3, **characterized in that** the user-related data, in particular the telephone number, are transmitted to the evaluation device (20) as part of the first data set (30) when entering the parking facility (1).

6. Method according to any one of the preceding claims, **characterized in that** the transaction identifier (44) is automatically generated by the evaluation device (20) after the first data set (30) has been received and is transmitted to the user, preferably to the mobile terminal (37) carried by the user.

7. Method according to any one of the preceding claims 1 to 5, **characterized in that** the transaction identifier (44) is generated after receiving the first data set (30) at the user's prior request and is transmitted to the user, preferably to the mobile terminal (37) carried by the user.

8. Method according to any one of the preceding claims, **characterized in that** the transaction identifier (44) is provided by the user's mobile terminal (37) and transmitted to the user interface (40) of the current charging device (5).

9. Method according to any one of the preceding claims, **characterized in that** the transaction identifier (44) is entered manually into the user interface (40) of the current charging device (5) in the form of a numerical code or is read in optically in the form of a QR code or a barcode by the user interface (40) of the current charging device (5) or is read in by the user interface (40) of the current charging device (5) by means of a contactless radio data interface.

10. Method according to any one of the preceding claims, **characterized in that** the transaction identifier (44) is checked for validity by the evaluation device (20) before the start of a current charging process.

11. Method according to any one of the preceding claims, **characterized in that** a freely predeterminable validity period is generated for the transaction identifier (44) when it is generated.

12. Method according to any one of the preceding claims, **characterized in that** a validity check of the transaction identifier (44) comprises a check for an unambiguous assignment of the transaction identifier (44) to an entry process and a check for the existence of the validity period.

13. Method according to any one of the preceding claims, **characterized in that** a joint billing of charges for a parking process on the one hand and a current charging process on the other hand is carried out.

14. Parking facility, in particular chargeable parking facility (1), for at least partially electrically operated vehicles (13), comprising a plurality of current charging points (6, 7, 8), preferably for carrying out a method according to any one of the preceding claims 1 to 11, the parking facility comprising:
- an evaluation device (20) comprising a receiving unit (25), a transaction unit (53) and an evaluation unit (27),
- wherein the receiving unit (25) is configured to receive
a first data set (30) comprising an identifier (31) identifying a user of the parking facility (1), an identifier (32) of the entrance (9) of the parking facility (1) and a first time stamp (33),
a second data set (34) comprising the identifier (31) identifying the user of the parking facility (1), an identifier (32) of the exit (10) of the parking facility (1) and a second time stamp (36), and
user-related data of a user of the parking facility (1), in particular a telephone number of a mobile terminal (37) carried by the user of the parking facility (1),
- wherein the transaction unit (53) is configured to generate and send a transaction identifier (44) to the user of the parking facility (1), in particular to the mobile terminal (37) carried by the user of the parking facility (1), wherein the transaction identifier is generated either automatically or on prior request by the user after the first data set has been received by the evaluation device, and the generated transaction identifier is assigned to the user by means of the user-related data,
- wherein the receiving unit (25) is further arranged to receive a third data set (43) comprising the transaction identifier (44), an identifier (45) of the current charging point (6, 7, 8) and a third time stamp (46), and
a fourth data record (50), comprising the identifier (45) of the current charging point (6, 7, 8) and a fourth time stamp (51),
- and wherein the evaluation unit (27) is configured for evaluating the received data sets (30, 34, 43, 50) in an evaluation process, wherein a parking process is determined by means of the first and the second data set (30, 34) and a current charging process is determined by means of the third and the fourth data set (43, 50) and wherein the current charging process is assigned to the parking process on the basis of the transaction identifier (44).

15. Parking facility according to claim 14, **characterized in that** the evaluation device (20) also has a checking unit (47) which is configured to check the transaction identifier (44) for validity.

16. Parking facility according to claim 14 or 15, **characterized in that** the units (25, 26, 27, 28, 29, 47, 53) of the evaluation device (20) are designed to be at least partially remote from the parking facility.

17. Evaluation device (20) for a paid parking facility (1) according to claim 14, comprising a receiving unit (25), a transaction unit (53) and an evaluation unit (27),
- wherein the receiving unit (25) is configured to receive
a first data set (30), comprising an identifier (31) identifying a user of the parking facility (1), an identifier (32) of the entrance (9) of the parking facility (1) and a first time stamp (33),
a second data set (34) comprising the identifier (31) identifying the user of the parking facility (1), an identifier (32) of the exit (10) of the parking facility (1) and a second time stamp (36), and
a telephone number of a mobile terminal (37) carried by a user of the parking facility (1),
- the transaction unit (53) being configured to generate and send a transaction identifier (44) to the user of the parking facility (1), in particular to the mobile terminal (37) carried by the user of the parking facility (1), the transaction identifier being generated either automatically or on prior request by the user after the first data set has been received by the evaluation device, and the generated transaction identifier being assigned to the user by means of the user-related data,
- wherein the receiving unit (25) is further arranged to receive
a third data set (43) comprising the transaction identifier (44), an identifier (45) of the current charging point (6, 7, 8) and a third timestamp (46), and
a fourth data set (50), comprising the identifier (45) of the current charging point (6, 7, 8) and a fourth time stamp (51),
- and wherein the evaluation unit (27) is configured to evaluate the received data sets (30, 34, 43, 50) in an evaluation process, wherein a parking process is determined by means of the first and the second data set (30, 34) and a current charging process is determined by means of the third and the fourth data set (43, 50) and wherein the current charging process is assigned to the parking process on the basis of the transaction identifier (44).

18. Parking facility according to any one of claims 14-16 with a device for a current charging device (5) of the parking facility (1) providing a current charging point (6, 7, 8), with a user interface (40) which is configured to receive the transaction identifier (44) from a user of the parking facility (1), in particular from a mobile terminal (37) of a user of the parking facility (1), with a generating unit which is configured to automatically generate and send a data set (43) to an evaluation device (20) of the parking facility (1), the data set (43) comprising the transaction identifier (44), an identifier (45) of the current charging point (6, 7, 8) and a time stamp (46).

19. Parking facility according to claim 18, **characterized in that** the user interface (40) comprises a radio module.

20. Parking facility according to claim 18, **characterized in that** the user interface (40) has a reading device.

21. Parking facility according to any one of the preceding claims 18 to 20, **characterized by** a display device of the device for a current charging device providing a current charging point.

22. Parking facility according to any one of the preceding claims 18 to 21, **characterized by** an enabling unit of the device for a current charging device providing a current charging point, wherein the enabling device is configured to initiate a current output by the current charging point (6, 7, 8) after a previous authorization by the evaluation device (20).

23. Parking facility according to any one of the preceding claims 18 to 22, **characterized in that** the generating unit is configured to automatically generate a further data set (50) upon termination of a current discharge by the current charging point (6, 7, 8) and to send it to the evaluation device (20), the further data set (50) comprising the identifier (45) of the current charging point (6, 7, 8) and a further time stamp (51).

## Revendications

1. Procédé de fonctionnement d'une installation de parking payante (1), en particulier d'une installation de parking (1) pour des véhicules (13) fonctionnant au moins partiellement à l'électricité, installation qui présente une pluralité de points de chargement de courant (5, 6, 7), le procédé comprenant les étapes suivantes:
- lors de l'entrée d'un véhicule (13) dans l'installation de parking (1), la réception d'un premier ensemble de données (30) par un dispositif d'évaluation (20), le premier ensemble de données (30) comprenant un identifiant (31) identifiant un utilisateur de l'installation de parking (1), un identifiant (32) de l'entrée (9) de l'installation de parking (1) et un premier horodateur (33),
- lors de la sortie du véhicule (13) de l'installation de parking (1), la réception d'un deuxième ensemble de données (34) par le dispositif d'évaluation (20), le deuxième ensemble de données (34) comprenant l'identifiant (31) identifiant l'utilisateur de l'installation de parking (1), un identifiant (35) de la sortie (10) de l'installation de parking (1) et un deuxième horodateur (36),
- la transmission par l'utilisateur de données relatives à l'utilisateur au dispositif d'évaluation (20),
- la génération d'un identifiant de transaction (44) par le dispositif d'évaluation (20) et l'envoi de l'identifiant de transaction (44) à l'utilisateur, l'identifiant de transaction étant généré après une réception du premier ensemble de données par le dispositif d'évaluation, soit automatiquement, soit sur demande préalable de l'utilisateur, et l'identifiant de transaction généré étant attribué à l'utilisateur au moyen des données relatives à l'utilisateur,
- l'initialisation d'une chargement de courant à un point de chargement de courant (6, 7, 8) en transmettant l'identifiant de transaction (44) à une interface utilisateur (40) d'un dispositif de chargement de courant (5) fournissant le point de chargement de courant (6, 7, 8),
- la réception d'un troisième ensemble de données (43) provenant du dispositif de chargement de courant (5) fournissant le point de chargement de courant (6, 7, 8) par le dispositif d'évaluation (20), le troisième ensemble de données (43) comprenant l'identifiant de transaction (44), un identifiant (45) du point de chargement de courant (6, 7, 8) et un troisième horodateur (46),
- la réception d'un quatrième ensemble de données (50) provenant du dispositif de chargement de courant (5) fournissant le point de chargement de courant (6, 7, 8) par le dispositif d'évaluation (20), le quatrième ensemble de données (50) comprenant l'identification du point de chargement de courant (6, 7, 8) et un quatrième horodateur (51), et
- dans un processus d'évaluation, l'évaluation des ensembles de données reçus (30, 34, 43, 50) par le dispositif d'évaluation (20), un processus de parking étant déterminé au moyen du premier et du deuxième ensemble de données (30, 34) et un processus de chargement de courant étant déterminé au moyen du troisième et du quatrième ensemble de données (43, 50) et le processus de chargement de courant étant associé au processus de parking à l'aide de l'identificateur de transaction (44).

2. Procédé selon la revendication 1, **caractérisé en ce que** les données relatives à l'utilisateur comportent un identifiant identifiant un terminal mobile (37) emporté par l'utilisateur de l'installation de parking (1).

3. Procédé selon la revendication 2, **caractérisé en ce que** l'identifiant de terminal mobile (37) est le numéro de téléphone du terminal mobile (37).

4. Procédé selon la revendication 3, **caractérisé en ce que** les données relatives à l'utilisateur, notamment le numéro de téléphone, sont transmises au dispositif d'évaluation (20) avant l'entrée dans l'installation de parking (1) par un enregistrement préalable de l'utilisateur.

5. Procédé selon la revendication 3, **caractérisé en ce que** les données relatives à l'utilisateur, en particulier le numéro de téléphone, sont transmises au dispositif d'évaluation (20) en tant que partie du premier enregistrement (30) lors de l'entrée dans l'installation de parking (1).

6. Procédé selon l'une des revendications précédentes, **caractérisé en ce que** l'identifiant de transaction (44) est généré automatiquement après une réception du premier ensemble de données (30) par le dispositif d'évaluation (20) et est transmis à l'utilisateur, de préférence au terminal mobile (37) emporté par l'utilisateur.

7. Procédé selon l'une des revendications précédentes 1 à 5, **caractérisé en ce que** l'identifiant de transaction (44) est généré après une réception du premier ensemble de données (30) sur demande préalable de l'utilisateur et est transmis à l'utilisateur, de préférence au terminal mobile (37) emporté par l'utilisateur.

8. Procédé selon l'une des revendications précédentes, **caractérisé en ce que** l'identifiant de transaction (44) est fourni par le terminal mobile (37) de l'utilisateur et transmis à l'interface utilisateur (40) du dispositif de chargement de courant (5).

9. Procédé selon l'une des revendications précédentes, **caractérisé en ce que** l'identifiant de transaction (44) est saisi manuellement sur l'interface utilisateur (40) du dispositif de chargement de courant (5) sous la forme d'un code numérique ou est lu optiquement par l'interface utilisateur (40) du dispositif de chargement de courant (5) sous la forme d'un code QR ou d'un code à barres ou est lu par l'interface utilisateur (40) du dispositif de chargement de courant (5) au moyen d'une interface de données radio sans contact.

10. Procédé selon l'une des revendications précédentes, **caractérisé en ce que** la validité de l'identifiant de transaction (44) est vérifiée par le dispositif d'évaluation (20) avant le début d'une opération de chargement de courant.

11. Procédé selon l'une des revendications précédentes, **caractérisé en ce qu'**une durée de validité librement prédéfinissable est générée pour l'identifiant de transaction (44) lors de sa création.

12. Procédé selon l'une des revendications précédentes, **caractérisé en ce qu'**un contrôle de la validité de l'identifiant de transaction (44) comprend un contrôle de l'attribution univoque de l'identifiant de transaction (44) à un processus d'entrée et un contrôle de l'existence de la durée de validité.

13. Procédé selon l'une quelconque des revendications précédentes, **caractérisé en ce qu'**une facturation commune de frais pour une procédure de parking d'une part et un procédé de chargement de courant d'autre part est effectuée.

14. Installation de parking, en particulier installation de parking payante (1), pour des véhicules (13) fonctionnant au moins partiellement à l'électricité, avec une pluralité de points de chargement de courant (6, 7, 8), de préférence pour la mise en oeuvre d'un procédé selon l'une des revendications précédentes 1 à 11, comprenant:
- un dispositif d'évaluation (20) qui présente une unité de réception (25), une unité de transaction (53) et une unité d'évaluation (27),
- l'unité de réception (25) étant agencée pour recevoir
- un premier ensemble de données (30), comprenant un identifiant (31) identifiant un utilisateur de l'installation de parking (1), un identifiant (32) de l'entrée (9) de l'installation de parking (1) et un premier horodateur (33),
- un deuxième ensemble de données (34) comprenant l'identifiant (31) identifiant l'utilisateur de l'installation de parking (1), un identifiant (32) de la sortie (10) de l'installation de parking (1) et un deuxième horodateur (36), et
- des données relatives à l'utilisateur de l'installation de parking (1), en particulier un numéro de téléphone d'un terminal mobile (37) porté par l'utilisateur du dispositif de stationnement (1),
- l'unité de transaction (53) étant agencée pour générer et envoyer un identifiant de transaction (44) à l'utilisateur de l'installation de parking (1), en particulier au terminal mobile (37) emporté par l'utilisateur de l'installation de parking (1), l'identifiant de transaction étant généré après une réception du premier ensemble de données par le dispositif d'évaluation, soit automatiquement, soit sur demande préalable de l'utilisateur, et l'identifiant de transaction généré étant associé à l'utilisateur au moyen des données relatives à l'utilisateur,
- l'unité de réception (25) étant en outre agencée pour recevoir un troisième ensemble de données (43) comprenant l'identifiant de transaction (44), un identifiant (45) du point de chargement de courant (6, 7, 8) et un troisième horodateur (46), et
d'un quatrième ensemble de données (50) comprenant l'identifiant (45) du point de chargement de courant (6, 7, 8) et un quatrième horodateur (51),
- et l'unité d'évaluation (27) étant agencée pour évaluer les ensembles de données reçus (30, 34, 43, 50) dans un processus d'évaluation, un processus de parking étant déterminé au moyen du premier et du deuxième ensemble de données (30, 34) et un procédé de chargement de courant étant déterminé au moyen du troisième et du quatrième ensemble de données (43, 50), et le procédé de chargement de courant étant associé au processus de parking à l'aide de l'identifiant de transaction (44).

15. Installation de parking selon la revendication 14, **caractérisée en ce que** le dispositif d'évaluation (20) comporte en outre une unité de contrôle (47) qui est agencée pour vérifier la validité de l'identifiant de transaction (44).

16. Installation de parking selon la revendication 14 ou 15, **caractérisée en ce que** les unités (25, 26, 27, 28, 29, 47, 53) du dispositif d'évaluation (20) sont réalisées au moins partiellement à distance locale de l'installation de parking.

17. Dispositif d'évaluation (20) pour une installation de parking payante (1) selon la revendication 14, présentant une unité de réception (25), une unité de transaction (53) et une unité d'évaluation (27),
- l'unité de réception (25) étant agencée pour recevoir un premier ensemble de données (30), comprenant un identifiant (31) identifiant un utilisateur de l'installation de parking (1), un identifiant (32) de l'entrée (9) de l'installation de parking (1) et un premier horodateur (33),
un deuxième ensemble de données (34) comprenant l'identifiant (31) identifiant l'utilisateur de l'installation de parking (1), un identifiant (32) de la sortie (10) de l'installation de parking (1) et un deuxième horodateur (36), et
un numéro de téléphone d'un terminal mobile (37) emporté par un utilisateur de l'installation de parking (1),
- l'unité de transaction (53) étant agencée pour générer et envoyer un identifiant de transaction (44) à l'utilisateur de l'installation de parking (1), en particulier au terminal mobile (37) emporté par l'utilisateur de l'installation de parking (1), l'identifiant de transaction étant généré après une réception du premier ensemble de données par le dispositif d'évaluation, soit automatiquement, soit sur demande préalable de l'utilisateur, et l'identifiant de transaction généré étant attribué à l'utilisateur au moyen des données relatives à l'utilisateur,
- l'unité de réception (25) étant en outre agencée pour recevoir
- un troisième ensemble de données (43) comprenant l'identifiant de transaction (44), un identifiant (45) du point de chargement de courant (6, 7, 8) et un troisième horodateur, et
un quatrième ensemble de données (50) comprenant l'identifiant (45) du point de chargement de courant (6, 7, 8) et un quatrième horodateur (51),
- et l'unité d'évaluation (27) étant agencée pour évaluer les ensembles de données reçus (30, 34, 43, 50) dans un processus d'évaluation, un processus de parking étant déterminée au moyen du premier et du deuxième ensemble de données (30, 34) et un procédé de chargement de courant étant déterminé au moyen du troisième et du quatrième ensemble de données (43, 50), et le procédé de chargement de courant étant associé au processus de parking à l'aide de l'identificateur de transaction (44).

18. Installation de parking selon l'une des revendications 14-16, avec un dispositif pour un dispositif de chargement de courant (5) de l'installation de parking (1) fournissant un point de chargement de courant (6, 7, 8), avec une interface utilisateur (40) qui est agencée pour recevoir l'identifiant de transaction (44) d'un utilisateur de l'installation de parking (1), notamment d'un terminal mobile (37) d'un utilisateur de l'installation de parking (1), avec un dispositif de génération qui est agencé pour générer et envoyer automatiquement un ensemble de données (43) à un dispositif d'évaluation (20) de l'installation de parking (1), l'ensemble de données (43) comprenant l'identifiant de transaction (44), un identifiant (45) du point de chargement de courant (6, 7, 8) et un horodateur (46).

19. Installation de parking selon la revendication 18, **caractérisée en ce que** l'interface utilisateur (40) comporte un module radio.

20. Installation de parking selon la revendication 18, **caractérisée en ce que** l'interface utilisateur (40) comporte un dispositif de lecture.

21. Installation de parking selon l'une des revendications précédentes 18 à 20, **caractérisée par** un moyen d'affichage du dispositif pour un dispositif de chargement de courant fournissant un point de chargement de courant.

22. Installation de parking selon l'une des revendications précédentes 18 à 21, **caractérisée par** une unité de libération du dispositif pour un dispositif de chargement de courant fournissant un point de chargement de courant, le dispositif de libération étant agencé pour initier une délivrance de courant par le point de chargement de courant (6, 7, 8) après une autorisation préalable par le dispositif d'évaluation (20).

23. Installation de parking selon l'une des revendications 18 à 22 précédentes, **caractérisée en ce que** l'unité de génération est agencée pour générer automatiquement un autre ensemble de données (50) à la fin d'une fourniture de courant par le point de chargement de courant (6, 7, 8) et pour l'envoyer au dispositif d'évaluation (20), l'autre ensemble de données (50) comprenant l'identifiant (45) du point de chargement de courant (6, 7, 8) et un autre horodateur (51).
